(19) Europäisches Patentamt
European Patent Office
Office européen des brevets

(11) EP 1 489 842 B1

(12) # EUROPÄISCHE PATENTSCHRIFT

(45) Veröffentlichungstag und Bekanntmachung des Hinweises auf die Patenterteilung:
**10.08.2011 Patentblatt 2011/32**

(51) Int Cl.:
***H04N 7/01*** *(2006.01)*

(21) Anmeldenummer: **04014121.0**

(22) Anmeldetag: **16.06.2004**

(54) **Verfahren und Vorrichtung zur bewegungsvektorgestützten Bildpunktinterpolation**

Motion vector based method and device for the interpolation of picture elements

Procédé et appareil d'interpolation des éléments d'image en fonction du vecteur de mouvement

(84) Benannte Vertragsstaaten:
**DE FR GB IT NL**

(30) Priorität: **18.06.2003 DE 10327576**

(43) Veröffentlichungstag der Anmeldung:
**22.12.2004 Patentblatt 2004/52**

(73) Patentinhaber: **Trident Microsystems (Far East) Ltd.**
**Grand Cayman (KY)**

(72) Erfinder: **Hahn, Marko**
**85579 Neubiberg (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**US-A- 5 214 751 US-A- 5 534 946**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 489 842 B1

## Beschreibung

Die vorliegende Erfindung betrifft ein Verfahren und eine Vorrichtung zur bewegungsvektorgestützten Bildpunktinterpolation.

Verschiebungsvektoren dienen in der Bildverarbeitung in hinlänglich bekannter Weise dazu, eine Positionsveränderung eines Objekts oder eines Bildbereiches von einer ersten Position in einem ersten Bild zu einer zweiten Position in einem zweiten Bild zu definieren.

Die beiden Bilder können dabei zeitlich aufeinanderfolgend aufgenommen sein und somit eine Bewegung des Objekts oder Bildbereiches in einem dargestellten Bildausschnitt über der Zeit veranschaulichen. Der Bewegungsvektor dient in solchen Fällen beispielsweise zur Interpolation eines oder mehrerer Zwischenbilder, die die Position des Objekts/Bildbereiches zu einem oder mehreren Zeitpunkten zwischen der Aufnahme des ersten und zweiten Bildes wiedergeben, beispielsweise bei der 50Hz/100Hz-Bildkonversion oder bei der Erzeugung sogenannter "künstlicher Zeitlupen".

Die beiden Bilder können auch gleichzeitig aus einer ersten und zweiten Kameraposition aufgenommen sein, wobei der zu ermittelnde Verschiebungsvektor dazu dient, ein Zwischenbild zu erzeugen, das das Objekt/den Bildbereich aus einer virtuellen dritten Kameraposition zeigt, die zwischen der ersten und zweiten Kameraposition liegt.

Verfahren zur Schätzung von Verschiebungsvektoren für ausgewählte Bildbereiche, die im Extremfall nur einen Bildpunkt umfassen, anhand eines ersten und zweiten Bildes sind hinlänglich bekannt, so dass auf solche Verfahren hierauf nicht näher eingegangen wird. Wurde für einen gegebenen Bildbereich des ersten Bildes ein Verschiebungsvektor ermittelt, so stimmt bei einer korrekten Ermittlung des Verschiebungsvektors der Bildbereich am Anfangspunkt des Verschiebungsvektors in dem ersten Bild mit dem Bildbereich am Ende des Verschiebungsvektors in dem zweiten Bild überein. Ein Bildbereich des Zwischenbildes lässt sich dann dadurch interpolieren, dass entweder der Bildbereich am Anfangspunkt des Bildvektors in dem ersten Bild oder der Bildbereich am Endpunkt des Bildvektors in dem zweiten Bild als Bildbereich des Zwischenbildes verwendet wird. Die Position des aus dem Bildbereich am Anfangspunkt des Bildvektors in dem ersten Bild oder aus dem am Endpunkt des Bildvektors in dem zweiten Bild liegenden Bildbereiches ermittelten Bildbereiches in dem Zwischenbild ist dabei abhängig von dem Bewegungsvektor und der zeitlichen Lage des Zwischenbildes zwischen den beiden ursprünglichen Bildern oder der räumlichen Lage der virtuellen Kameraposition in Bezug auf die erste und zweite Kameraposition.

Die Schätzung des Bewegungsvektors ist für gewöhnlich jedoch fehlerbehaftet, so dass bei bekannten Verfahren die Bildinformation eines Bildpunktes des Zwischenbildes dadurch ermittelt wird, dass die Bildinformation des Bildpunktes am Anfangspunkt des Bewegungsvektors in dem ersten Bild und die Bildinformation des Bildpunktes am Ende des Bewegungsvektors in dem zweiten Bild miteinander gemischt werden. Dabei können die Bildinformationen der beiden Bildpunkte zur Mischung abhängig von der jeweiligen Anwendung beliebig gewichtet werden.

Es sind weiterhin Verfahren bekannt, bei denen jeweils mehrere Bewegungsvektoren für die einzelnen Bildbereiche ermittelt werden. Einem Bildpunkt in dem Zwischenbild sind dann entsprechend ebenfalls mehrere Verschiebungsvektoren zugeordnet. Bei einem bekannten Verfahren ist es dabei vorgesehen, zur Interpolation des Bildinformationswertes dieses Bildpunktes des Zwischenbildes die Bildinformationswerte der Anfangspunkte der Verschiebungsvektoren in dem ersten Bild und die Bildinformationswerte der Endpunkte der Verschiebungsvektoren in dem zweiten Bild einer Medianfilterung zu unterziehen. Ein dem zweiten Bild einer Medianfilterung zu unterziehen. Ein derartiges Verfahren ist beispielsweise in der US 5,534,946 beschrieben.

Die US-A-5 534 946 beschreibt eine Vorrichtung zur bewegungskompensierten Interpolation eines Zwischenbildes zwischen einem ersten und einem zweiten Bild. Diese Vorrichtung ermittelt wenigstens zwei Bewegungsvektoren, die auf Bildpunkte in den ersten und zweiten Bildern zeigen. Diese Bildpunkte werden zur Ermittlung eines Bildpunktes des Zwischenbildes einem statistischen Rangfolgen-Filter zugeführt.

Ziel der vorliegenden Erfindung ist es, ein einfach zu realisierendes Verfahren und eine einfach zu realisierende Vorrichtung zur bewegungsvektorgestützten Bildpunktinterpolation zur Verfügung zu stellen.

Dieses Ziel wird durch ein Verfahren gemäß der Merkmale des Anspruchs 1 und durch eine Vorrichtung gemäß der Merkmale des Anspruchs 11 gelöst. Vorteilhafte Ausgestaltungen der Erfindung sind Gegenstand der Unteransprüche.

Bei dem erfindungsgemäßen Verfahren zur bewegungsvektorgestützten Interpolation eines Bildpunktes in einem zeitlich oder räumlich zwischen einem ersten und einem zweiten Bild liegenden Zwischenbild ist vorgesehen, wenigstens einen ersten und einen zweiten Bewegungsvektor dem zu interpolierenden Bildpunkt zuzuordnen, wobei jedem Bewegungsvektor ein Bildpunkt in dem ersten Bild und ein Bildpunkt in dem zweiten Bild zugeordnet ist. Anhand des Bildinformationswertes wenigstens eines ersten Bildpunktes, der dem wenigstens einen ersten Verschiebungsvektor in dem ersten Bild zugeordnet ist, wird ein erster Bildinformationswert ermittelt, und anhand des Bildinformationswertes eines zweiten Bildpunktes, der dem wenigstens einen ersten Verschiebungsvektor in dem zweiten Bild zugeordnet ist, wird ein zweiter Bildinformationswert ermittelt. Außerdem werden ein erster weiterer Bildinformationswert und ein zweiter weiterer Bildinformationswert anhand des Bildinformationswertes des dem zweiten Verschiebungsvektor in dem ersten Bild zugeordneten Bildpunktes und des dem zweiten Verschiebungsvektor in dem zweiten Bild zugeordneten Bildpunktes ermittelt.

Bildinformationswerte bezeichnen im Folgenden beispielsweise Luminanzwerte oder Chrominanzwerte.

Aus diesem ersten weiteren Bildinformationswert und diesem zweiten weiteren Bildinformationswert, die anhand des zweiten Verschiebungsvektors ermittelt werden, wird durch Mischen dieser Bildinformationswerte ein dritter Bildinformationswert erzeugt.

Der erste und zweite Bildinformationswert, bilden ein Werteintervall, wobei die mathematische Lage des dritten Bildinformationswertes bezogen auf die Intervallgrenzen ermittelt wird. Abhängig von der Lage des dritten Bildinformationswertes bezogen auf die Intervallgrenzen wird der zu interpolierende Bildinformationswert bestimmt, wobei unterschieden wird, ob der dritte Bildinformationswert innerhalb oder außerhalb des durch den ersten und zweiten Bildinformationswert gegebenen Intervalls liegt.

Liegt der dritte Bildinformationswert innerhalb dieses durch den ersten und zweiten Bildinformationswert vorgegebenen Intervalls, so wird der dritte Bildinformationswert als Bildinformationswert des zu interpolierenden Bildpunktes ausgegebenen.

Liegt der dritte Bildinformationswert außerhalb dieses Intervalls, so wird der mathematische Abstand des dritten Bildinformationswertes zu der nächstliegenden Intervallgrenze bestimmt, und es wird ein Bildinformationswert ermittelt, der ebenfalls um den Wert des Abstandes zwischen dem dritten Bildinformationswert und der nächstliegenden Intervallgrenze oder um einen modifizierten Abstandswert von der nächstliegenden Intervallgrenze entfernt ist und der innerhalb des Intervalls liegt. Dieser Bildinformationswert wird als Bildinformationswert des zu interpolierenden Bildpunktes ausgewählt.

Ein aus dem ermittelten Abstandswert resultierender modifizierter Abstandswert, um den der interpolierte Bildinformationswert von der nächstliegenden Intervallgrenze entfernt liegt, wird beispielsweise durch eine Verstärkung, also eine Vergrößerung des Wertes gegenüber dem tatsächlichen Abstand, oder eine Dämpfung, also eine Verkleinerung dieses Wertes gegenüber dem tatsächlichen Abstandswert, erhalten.

Liegt der dritte Bildinformationswert außerhalb des durch den ersten und zweiten Bildinformationswert gegebenen Intervalls und beträgt der Abstand des dritten Bildinformationswertes zu der nächstliegenden Intervallgrenze mehr als die Hälfte der Intervallbreite, so wird der Mittelwert zwischen dem ersten Bildinformationswert und dem zweiten Bildinformationswert als interpolierter Bildinformationswert festgelegt. Dies kann bei einer Implementierung des Verfahrens beispielsweise dadurch erreicht werden, dass bei der Ermittlung des Abstandes zwischen dem dritten Bildinformationswert und der nächstliegenden Intervallgrenze dieser Abstandswert auf die Hälfte der Intervallbreite begrenzt wird.

Bei dem erfindungsgemäßen Verfahren ist sichergestellt, dass der interpolierte Bildinformationswert stets zwischen dem ersten und zweiten Bildinformationswert liegt oder einem dieser Bildinformationswerte entspricht, wobei vorzugsweise der erste und zweite Bildinformationswert nur dann als interpolierter Bildinformationswert ausgegeben werden, wenn die beiden Werte gleich sind und die Intervallbreite somit Null beträgt oder wenn der dritte Bildinformationswert mit dem ersten oder zweiten Bildinformationswert übereinstimmt.

Um Rauscheinflüsse zu unterdrücken ist bei einer Ausführungsform der Erfindung vorgesehen, den Abstand zwischen dem dritten Bildinformationswert und der nächstliegenden Intervallgrenze, bzw. einen daraus resultierenden Wert, zu Null zu setzen, wenn dieser Abstand kleiner als ein vorgegebener Grenzwert ist, wobei als interpolierter Bildinformationswert dann der die nächstliegende Intervallgrenze darstellende Bildinformationswert ausgegeben wird. Des weiteren besteht die die Möglichkeit diesen aus dem Abstand resultierenden Wert zu dämpfen, also zu verkleinern.

Das Mischverfahren zur Erzeugung des dritten Bildinformationswertes aus dem ersten und zweiten weiteren Bildinformationswert kann unterschiedlich ausgestaltet sein. So ist bei einer Ausführungsform der Erfindung vorgesehen, dass der dritte Bildinformationswert dem Mittelwert des ersten und zweiten weiteren Bildinformationswertes entspricht, was einer Gewichtung des ersten und zweiten weiteren Bildinformationswertes jeweils mit dem Faktor 0,5 entspricht. Eine solche gleichmäßige Gewichtung der Bildinformationswerte findet beispielsweise dann Anwendung, wenn das Zwischenbild räumlich oder zeitlich zwischen dem ersten und zweiten Bild liegt. Abhängig von dieser Lage des Zwischenbildes sind selbstverständlich beliebige weitere Gewichtungsfaktoren anwendbar, die in der Summe jeweils Eins ergeben, so dass gilt:

$$L3 = K4 \cdot L4 + K5 \cdot L5 \text{ mit } K4 + K5 = 1,$$

wobei L3 der dritte Bildinformationswert L4 der erste weitere und L5 der zweite weitere Bildinformationswert und K4 und K5 die Gewichtungsfaktoren dieser weiteren Bildinformationswerte sind.

Die Zuordnung der Bildpunkte zu den Bewegungsvektoren in dem ersten Bild erfolgt vorzugsweise derart, dass diese Bildpunkte an den Anfangspunkten der Bewegungsvektoren in dem ersten Bild liegen, und die Zuordnung der Bildpunkte zu den Bewegungsvektoren in dem zweiten Bild erfolgt vorzugsweise derart, dass diese Bildpunkte an den Endpunkten der Bewegungsvektoren in dem zweiten Bild liegen.

Der erste Bildinformationswert kann dem Bildinformationswert des Bildpunktes am Anfang des ersten Bewegungsvektors in dem ersten Bild entsprechen und der zweite Bildinformationswert kann dem Bildinformationswert des Bildpunktes am Ende des ersten Bewegungsvektors in dem zweiten Bild entsprechen.

Der erste und zweite Bildinformationswert können auch anhand von mehr als zwei Bildinformationswerten in folgender Weise ermittelt werden:

Es werden mehrere erste Bewegungsvektoren ausgewählt und Bildinformationswerte von Bildpunkten ermittelt, die diesen Bewegungsvektoren in dem ersten Bild und in dem zweiten Bild zugeordnet sind.

Anschließend werden Intervalle zwischen jedem der Bildinformationswerte der Bildpunkte, die den ersten Bewegungsvektoren in dem ersten Bild zugeordnet sind, und jedem der Bildinformationswerte der Bildpunkte, die den ersten Bewegungsvektoren in dem zweiten Bild zugeordnet sind, ermittelt und zwei der Bildinformationswerte als erster und zweiter Bildinformationswert ausgewählt. Vorzugsweise werden dabei die beiden Bildinformationswerte als erster und zweiter Bildinformationswert ausgewählt, zwischen denen das größte Intervall gebildet ist oder zwischen denen das kleinste Intervall gebildet ist.

Die vorliegende Erfindung wird nachfolgend in Ausführungsbeispielen anhand von Figuren näher erläutert. In den Figuren zeigt

Figur 1 schematisch zwei zeitlich oder räumlich aufeinanderfolgende Bilder und ein durch Interpolation des ersten und zweiten Bildes erzeugtes Zwischenbild,

Figur 2 eine grafische Veranschaulichung eines durch einen ersten und zweiten Bildinformationswert gegebenen Intervalls und der Lage eines dritten Bildinformationswertes bezogen auf das Intervall und der Lage eines interpolierten Bildinformationswertes,

Figur 3 Flussablaufdiagramm zur Veranschaulichung des Verfahrens,

Figur 4 ein erstes Ausführungsbeispiel einer Vorrichtung zur Durchführung des erfindungsgemäßen Verfahrens,

Figur 5 ein zweites Ausführungsbeispiel einer Vorrichtung zur Durchführung des erfindungsgemäßen Verfahrens,

Figur 6 ein drittes Ausführungsbeispiel einer Vorrichtung zur Durchführung des erfindungsgemäßen Verfahrens,

Figur 7 ein viertes Ausführungsbeispiel einer Vorrichtung zur Durchführung des erfindungsgemäßen Verfahrens.

In den Figuren bezeichnen, sofern nicht anders angegeben gleiche Bezugszeichen gleiche Teile mit gleicher Bedeutung.

Figur 1 zeigt schematisch ein erstes und zweites jeweils aus einer Vielzahl von Bildpunkten aufgebautes Bild A1, B1, wobei die beiden Bilder A1, B2 zeitlich oder räumlich aufeinanderfolgen, das heißt die beiden Bilder dabei zeitlich aufeinanderfolgend aufgenommen sein, und somit eine zeitliche Bewegung eines Objekts oder Bildbereiches in einem dargestellten Bildausschnitt veranschaulichen, oder die beiden Bilder können gleichzeitig aus einer ersten und zweiten Kameraposition aufgenommen sein, also gleichzeitige Darstellungen eines Objekts aus unterschiedlichen Blickwinkeln repräsentieren.

Ziel ist es, aus diesen Bildern ein Zwischenbild C1 zu erzeugen, das bei zeitlich aufeinanderfolgenden Bildern A1, B1 eine Darstellung zu einem Zeitpunkt zwischen den Aufnahmezeitpunkten des ersten und zweiten Bildes repräsentiert, und das bei gleichzeitig aus verschiedenen Blickwinkeln aufgenommenen Bildern eine Darstellung aus einem weiteren Blickwinkel repräsentiert.

Gemäß dem erfindungsgemäßen Verfahren ist vorgesehen, einem zu interpolierenden Bildpunkt Px wenigstens einen ersten Bewegungsvektor vec1 und einen zweiten Bewegungsvektor vec2 zuzuordnen. Die Ermittlung von Bewegungsvektoren an sich ist hinlänglich bekannt, so dass auf eine detaillierte Darstellung hier verzichtet werden kann und nur einige grundsätzliche Ausführungen hierzu gemacht werden.

In der Darstellung gemäß Figur 1 wird davon ausgegangen, dass die Position des Bildpunktes Px auf einem ersten Bewegungsvektor liegt, der die Verschiebung eines Bildpunktes P1 aus dem ersten Bildbereich 1 des ersten Bildes A1 zu einem Bildpunkt P2 in einem zweiten Bildbereich 2 des zweiten Bildes B1 angibt. Der Verschiebungsvektor vec1 ist dabei beispielsweise allen Bildpunkten des ersten Bildbereiches 1 zugeordnet und gibt deren Verschiebung auf den Bildbereich 2 in dem zweiten Bild B1 an.

Der zu interpolierende Bildpunkt Px liegt außerdem auf einem zweiten Verschiebungsvektor, der die Verschiebung eines ersten weiteren Bildpunktes P3 von einem Bildbereich 3 in dem ersten Bild A1 auf einen zweiten weiteren Bildpunkt P4 in einem Bildbereich 4 in dem zweiten Bild B1 darstellt.

Dem Bildpunkt Px sind somit zwei Bewegungsvektoren vec1, vec2 zugeordnet, die beispielsweise in einem Schätzverfahren für Bewegungsvektoren als gleich gut angesehen wurden.

Das erfindungsgemäße Verfahren bietet eine einfach zu realisierende Möglichkeit, den Bildpunkt Px des Zwischenbildes, dem wenigstens zwei Verschiebungsvektoren vec1, vec2 zugeordnet sind, zu interpolieren, wobei dem zu interpolierenden Bildpunkt über die Verschiebungsvektoren vier Bildpunkte P1, P2, P3, P4 zugeordnet sind, die die Anfangs- und Endpunkte der Verschiebungsvektoren vec1, vec2 in dem ersten und zweiten Bild A1, B1 darstellen.

Das Verfahren sieht vor, ein Werteintervall zu ermitteln, das durch die Bildinformationswerte gebildet ist, die den Bildpunkten zugeordnet sind, die den Anfangspunkt eines der Vektoren vec1 in dem ersten Bild A1 und den Endpunkt dieses Vektors in dem zweiten Bild B1 darstellen, und aus den Bildinformationswerten, die den Anfangs- und Endpunkten P3, P4 des anderen Verschiebungsvektors vec2 zugeordnet sind einen dritten Bildinformationswert zu erzeugen.

Die Bildinformationswerte sind beispielsweise Luminanzwerte oder Chrominanzwerte.

Ohne Beschränkung der Allgemeinheit wird für die folgende Erörterung davon ausgegangen, dass das Wertintervall zwischen den dem ersten und zweiten Bildpunkt P1, P2 zugeordneten Bildinformationswerten ermittelt wird, wobei dem ersten Bildpunkt P1 ein Bildinformationswert L10 und dem zweiten Bildpunkt ein zweiter Bildinformationswert L20 zugeordnet ist.

Der dritte Bildinformationswert L3 wird durch Mischen eines Bildinformationswertes L30, der dem ersten weiteren Bildpunkt P3 zugeordnet ist, und eines Bildinformationswertes L40, der dem zweiten weiteren Bildpunkt P4 zugeordnet ist, erhalten. Die Mischung des ersten und zweiten weiteren Bildinformationswertes zum dritten Bildinformationswert erfolgt gemäß:

$$L3 = k3 \cdot L30 + k4 \cdot L40$$

wobei $k3 \geq 0$ und $k4 \geq 0$
und

$$k3 + k4 = 1 \qquad (1).$$

Die Gewichtungsfaktoren k3, k4 können abhängig vom Anwendungsfall in den durch Gleichung (1) gegebenen Grenzen beliebig gewählt werden, wobei die Gewichtungsfaktoren k3, k4 vorzugsweise gleich 0,5 sind, so dass der dritte Bildinformationswert dem Mittelwert des ersten und zweiten weiteren Bildinformationswertes L30, L40 entspricht.

Bei einer Ausführungsform ist vorgesehen, dass ein weiterer Vektor vec2 ein Nullvektor gewählt wird, wodurch ein Bildpunkt aus dem ersten Bild A1 und ein Bildpunkt aus dem zweiten Bild B1 gemischt werden, die sich jeweils an der Position des zu interpolierenden Bildpunktes Px befinden.

Das Verfahren sieht vor, die Lage des dritten Bildinformationswertes L3 bezogen auf das durch den ersten und zweiten Bildinformationswert L10, L20 vorgegebene Intervall [L10,L20] zu ermitteln, wobei der Bildinformationswert Lx des zu interpolierenden Bildpunktes Px abhängig von der Lage des dritten Bildinformationswertes L3 bezogen auf dieses Intervall ausgewählt wird, wie für drei unterschiedliche Beispiele anhand von Figur 2 erläutert wird.

Die Werte für den ersten, zweiten und dritten Bildinformationswert L10, L20, L3 sind in Figur 2 auf einer nach oben gerichteten Skala aufgetragen, wobei diese Bildinformationswerte L10, L20, L3 beispielsweise Helligkeitswerte sind, die Werte zwischen 0 und 255 annehmen können.

Figur 2a veranschaulicht ein erstes Szenario, bei welchem der erste Bildinformationswert L10 kleiner als der zweite Bildinformationswert L20 ist und bei dem der dritte Bildinformationswert L3 innerhalb des durch den ersten Bildinformationswert L10 und den zweiten Bildinformationswert L20 gegebenen Intervalls liegt. In diesem Fall wird bei dem erfindungsgemäßen Verfahren der dritte Bildinformationswert L3 als Bildinformationswert Lx des interpolierten Bildpunktes Px ausgewählt. Dies ist unabhängig davon, ob der erste Bildinformationswert L10 größer oder kleiner als der zweite Bildinformationswert L20 ist, so lange der dritte Bildinformationswert L3 innerhalb des durch diese beiden Bildinformationswerte L10, L20 vorgegebenen Intervalls liegt.

Figur 2b veranschaulicht ein weiteres Szenario, bei welchem der erste Bildinformationswert L10 wieder kleiner als der zweite Bildinformationswert L20 ist, bei dem der dritte Bildinformationswert L3 jedoch größer als der zweite Bildinformationswert L20 und damit außerhalb des durch den ersten und zweiten Bildinformationswert L10, L20 gebildeten Intervalls liegt. In diesem Fall wird bei dem erfindungsgemäßen Verfahren der betragsmäßige Abstand d zwischen dem dritten Bildinformationswert L3 und der nächstliegenden Intervallgrenze, die in Figur 2b durch den zweiten Bildinformationswert L20 gebildet ist, ermittelt. Der interpolierte Bildinformationswert Lx wird in diesem Fall dadurch ermittelt, dass der Abstand d, um welchen der dritte Bildinformationswert L3 außerhalb des Intervalls liegt, von dem zweiten Bildinformationswert L20 subtrahiert wird. Es wird also der Bildinformationswert Lx ermittelt, der innerhalb des durch L10 und L20 vorgegebenen Intervalls liegt und der um denselben Wert d von der zu dem dritten Bildinformationswert L3 nächstliegenden Intervallgrenze L20 entfernt ist, wie der dritte Bildinformationswert L3. Geometrisch gesehen entsteht der interpolierte Bildinformationswert Lx durch Spiegeln des dritten Bildinformationswertes L3 an der nächstliegenden Intervallgrenze L20. Gleiches gilt selbstverständlich auch, wenn der dritte Bildinformationswert L3 kleiner als der erste Bildinformationswert L10 ist, wobei dann ein den Abstand zwischen dem ersten Bildinformationswert L10 und dem dritten Bildinformationswert L3 repräsentierender Wert zu dem ersten Bildinformationswert L10 hinzuaddiert würde, um zu dem interpolierten Bildinformationswert Lx zu gelangen.

Figur 2c zeigt ein drittes Szenario, bei welchem der dritte Bildinformationswert L3 ebenfalls größer als der zweite Bildinformationswert L20 ist, wobei der betragsmäßige Abstand d zwischen dem dritten Bildinformationswert L3 und dem zweiten Bildinformationswert L20 jedoch größer als die halbe Breite des durch den ersten und zweiten Bildinformationswert L10, L20 vorgegebenen Intervalls ist. In diesem Fall wird als interpolierter Bildinformationswert Lx der Mittelwert zwischen dem ersten Bildinformationswert L10 und dem zweiten Bildinformationswert L20 ausgegeben.

Figur 3 veranschaulicht anhand eines Flussdiagramms den erfindungsgemäßen Verfahrensablauf.

In einem ersten Verfahrensschritt 100 wird ermittelt, ob der dritte Bildinformationswert L3 innerhalb des durch den ersten Bildinformationswert L10 und den zweiten Bildinformationswert L20 gegebenen Intervalls liegt. Wenn ja, wird in einem Verfahrensschritt 102 der zu interpolierende Bildinformationswert Lx gleich dem dritten Bildinformationswert L3 gesetzt. Liegt der dritte Bildinformationswert L3 außerhalb des durch die Bildinformationswerte L10, L20 gegebenen Intervalls, so wird in einem Verfahrensschritt 104 ermittelt, ob der dritte Bildinformationswert größer als der größere der beiden Bildinformationswerte L10, L20 ist. max(L10,L20) bezeichnet im Folgenden den größeren dieser beiden Bildinformationswerte L10, L20, wohingegen min(L10, L20) den kleineren dieser beiden Bildinformationswerte L10, L20 bezeichnet.

Ist der dritte Bildinformationswert L3 größer als der größere der beiden Bildinformationswerte L10, L20, der die obere Intervallgrenze darstellt, so wird in einem Verfahrensschritt 105 der Abstand d zwischen dem dritten Bildinformationswert L3 und der oberen Intervallgrenze max(L10,L02) ermittelt, indem der die obere Intervallgrenze repräsentierende Wert max(L10,L20) von dem dritten Bildinformationswert L3 subtrahiert wird. In einem Verfahrensschritt 107 wird dabei ermittelt, ob dieser Abstand d größer ist als die halbe betragsmäßige Differenz des ersten und zweiten Bildinformationswertes L10, L20. Wenn ja, wird in einem Verfahrensschritt 108 der interpolierte Bildinformationswert Lx gleich dem betragsmäßigen Mittelwert des ersten und zweiten Bildinformationswertes L10, L20 gesetzt. Wenn der Abstand d zwischen dem dritten Bildinformationswert L3 und der oberen Intervallgrenze max(L10,L20) nicht größer als der betragsmäßige Mittelwert des ersten und zweiten Bildinformationswertes L10, L20 ist, so wird in einem Verfahrensschritt 109 der interpolierte Bildinformationswert dadurch ermittelt, indem von der oberen Intervallgrenze max(L10,L20) der Abstandswert d subtrahiert wird.

Wird in Schritt 104 ermittelt, dass der dritte Bildinformationswert nicht größer als die obere Intervallgrenze max (L10,L20) ist, so muss der dritte Bildinformationswert L3 kleiner als die untere Intervallgrenze min(L10,L20) sein, da bereits in Schritt 100 ermittelt wurde, dass der dritte Bildinformationswert L3 nicht innerhalb des durch den ersten und zweiten Bildinformationswert L10, L20 gegebenen Intervalls liegt. In einem Verfahrensschritt 106 wird dann der Abstand zwischen dem dritten Bildinformationswert L3 und der unteren Intervallgrenze min(L10,L20) ermittelt, indem der dritte Bildinformationswert L3 von der unteren Intervallgrenze min(L10,L20) subtrahiert wird. In einem sich anschließenden Verfahrensschritt 110 wird ermittelt, ob der Abstand d größer als die halbe betragsmäßige Differenz des ersten und zweiten Bildinformationswertes L10, L20 ist. Wenn ja, wird der interpolierte Bildinformationswert Lx gleich dem betragsmäßigen Mittelwert des ersten und zweiten Bildinformationswertes L10, L20 gesetzt. Wenn nicht, wird der interpolierte Bildinformationswert Lx dadurch ermittelt, dass zu der unteren Intervallgrenze min(L1,L2) der Abstandswert d hinzuaddiert wird.

Ohne Beschränkung der Allgemeinheit wurde bei der bisherigen Erläuterung des erfindungsgemäßen Verfahrens davon ausgegangen, dass der erste Bildinformationswert L10 dem Bildinformationswert L1 eines ersten Bildpunktes P1 entspricht, der den Anfangspunkt des ersten Bewegungsvektors vec1 in dem ersten Bild A1 darstellt, und dass der zweite Bildinformationswert L20 dem Bildinformationswert L2 eines zweiten Bildpunktes P2 entspricht, der den Endpunkt des Bewegungsvektors vec1 in dem zweiten Bild darstellt.

Bei einer weiteren Ausführungsform ist vorgesehen, dass die das Intervall bildenden ersten und zweiten Bildinformationswerte L10, L20 anhand von mehr als zwei Bewegungsvektoren ermittelt werden, wobei der dritte Bildinformationswert nach wie vor aus der Mischung der Bildinformationswerte am Anfangs- und Endpunkt eines weiteren Bewegungsvektors ermittelt wird.

Für die Ermittlung des ersten und zweiten Bildinformationswertes ist vorgesehen, mehrere erste Bewegungsvektoren auszuwählen und Bildinformationswerte von Bildpunkten zu ermitteln, die diesen Bewegungsvektoren in dem ersten Bild und in dem zweiten Bild zugeordnet sind. Anschließend wird einer der Bildinformationswerte, der durch den Anfangspunkt eines der Bewegungsvektoren bestimmt ist, als erster Bildinformationswert ausgewählt und einer der Bildinformationswerte, der durch den Endpunkt eines der Bewegungsvektoren bestimmt ist, als zweiter Bildinformationswert ausgewählt. Vorzugsweise werden hierzu Intervalle zwischen jedem der Bildinformationswerten der Bildpunkte, die den ersten Bewegungsvektoren in dem ersten Bild zugeordnet sind, und jedem der Bildinformationswerte der Bildpunkte, die den ersten Bewegungsvektoren in dem zweiten Bild zugeordnet sind, ermittelt. Dabei werden vorzugsweise zwei Bildinformationswerte als erster und zweiter Bildinformationswert ausgewählt, zwischen denen das kleinste Intervall gebildet ist.

Bei einer weiteren Ausführungsform ist vorgesehen, den ersten und zweiten Bildinformationswert L10, L20 in der oben erläuterten Weise als Bildinformationswerte des ersten und zweiten Bildpunktes P1, P2 am Anfangs- und Endpunkt des ersten Bewegungsvektors vec1 auszuwählen und für die Ermittlung des dritten Bildinformationswertes L3 mehrere zweite Verschiebungsvektoren auszuwählen, wobei der dritte Bildinformationswert anhand folgender Gleichung ermittelt wird:

$$L3 = \Sigma\ kn \cdot Ln$$

mit

$$\Sigma\ kn = 1 \quad (2),$$

wobei Ln die den einzelnen weiteren Verschiebungsvektoren zugeordneten Bildinformationswerte darstellen und kn die zugehörigen Gewichtungsfaktoren sind.

Erfindungsgemäße Vorrichtungen zur Durchführung des erfindungsgemäßen Verfahrens werden nachfolgend anhand der Figuren 4 bis 7 näher erläutert.

Figur 4 zeigt ein erstes Ausführungsbeispiel einer erfindungsgemäßen Vorrichtung, der ein erster Bildinformationswert L10, ein zweiter Bildinformationswert L2 und ein dritter Bildinformationswert L3 zugeführt sind und die einen interpolierten Bildinformationswert Lx zur Verfügung stellt. Die Vorrichtung umfasst eine Sortieranordnung 1, der der erste und zweite Bildinformationswert L10, L20 zugeführt sind und die ein erstes Ausgangssignal Max = max(L10,L20) bereitstellt, welches dem größeren der beiden Bildinformationswerte L10, L20 entspricht, und die ein zweites Ausgangssignal Min = min (L10,L20) zur Verfügung stellt, welches dem kleineren der beiden Bildinformationswerte L10, L20 entspricht. Diese Ausgangssignale Max, Min der Sortieranordnung 1 sind einer Vergleicheranordnung 2 zusammen mit dem dritten Bildinformationswert L3 zugeführt.

Der dritte Bildinformationswert L3 wird durch eine Mischanordnung 16 aus dem ersten weiteren Bildinformationswert L30 und dem zweiten weiteren Bildinformationswert gemäß Gleichung 1 bereitgestellt, wobei die Gewichtungsfaktoren k3, k4 fest vorgegebenen oder optional von außen einstellbar sein können. Außerdem besteht die Möglichkeit, der Mischeinrichtung mehr als zwei weitere Bildinformationswerte zur Bildung des gemischten dritten Bildinformationswertes zuzuführen.

Die Vergleicheranordnung stellt ein erstes Steuersignal S1 zur Verfügung, welches angibt, ob der dritte Bildinformationswert L3 innerhalb eines Intervalls liegt, welches durch das erste und zweite Ausgangssignal Max, Min der Sortieranordnung 1 bzw. durch den ersten und zweiten Bildinformationswert L10, L20 gegeben ist. Die Vergleicheranordnung 2 stellt weiterhin ein zweites Steuersignal S2 zur Verfügung, welches angibt, ob der dritte Bildinformationswert L3 außerhalb dieses durch die Signale Max, Min gegebenen Intervalls liegt und ob er größer als die obere Intervallgrenze oder kleiner als die untere Intervallgrenze ist. Wenn der dritte Bildinformationswert innerhalb der Intervallgrenzen liegt, kann das zweite Steuersignal S2 undefiniert sein. Am Ausgang der Vergleicheranordnung 2 steht weiterhin ein Ausgangssignal A2 zur Verfügung, welches die zu dem dritten Bildinformationswert L3 nächstliegende Intervallgrenze repräsentiert, wenn der dritte Bildinformationswert außerhalb der Intervallgrenzen liegt, wobei das Ausgangssignal A2 entweder dem ersten Bildinformationswert L10 oder dem zweiten Bildinformationswert L20 entspricht. Liegt der dritte Bildinformationswert L3 innerhalb des durch die Signale Max, Min, bzw. dem ersten und zweiten Bildinformationswert L10, L20, gegebenen Intervalls, so kann das Ausgangssignal A2 der Vergleicheranordnung undefiniert sein, da dieses Ausgangssignal für die weitere Verarbeitung nicht benötigt wird.

Der Vergleicheranordnung 2 ist eine erste Subtrahieranordnung 3 nachgeschaltet, die ein Ausgangssignal A3 bereitstellt, welches dem Betrag einer Differenz zwischen dem dritten Bildinformationswert L3 und dem Ausgangssignal A2 der Vergleicheranordnung 2 entspricht. Das Ausgangssignal A3 dieser Subtrahieranordnung 3 ist einer Begrenzeranordnung 5 zugeführt, wobei die Begrenzeranordnung 5 den Wert des Ausgangssignals A3 der Subtrahieranordnung 3 nach oben hin auf einen Wert begrenzt, der der Hälfte des Betrags der Differenz zwischen dem ersten und zweiten Bildinformationswert L10, L20 entspricht. Dazu umfasst die Begrenzeranordnung 5 eine Grenzwertermittlungsschaltung 5b, der der erste und zweite Bildinformationswert L10, L20 zugeführt sind, und an deren Ausgang ein Signal A5B bereitsteht, welches der Hälfte des Betrags der Differenz zwischen dem ersten und zweiten Bildinformationswert L10, L20 entspricht und welches einer Begrenzerschaltung 5A als Grenzwert zugeführt ist.

Am Ausgang der Begrenzeranordnung 5 steht ein Ausgangssignal A5 zur Verfügung, welches dem Ausgangssignal A3 der Subtrahieranordnung 3 bzw. dem auf den Wert des Signals A5B begrenzten Subtrahiererausgangssignal entspricht. Das Begrenzerausgangssignal A5, das zweite Steuersignal S2 sowie das Ausgangssignal A2 der Vergleicheranordnung 2 sind einer Subtrahier- und Addieranordnung 6 zugeführt, die nach Maßgabe des zweiten Steuersignals S2 das Ausgangssignal A5 der Begrenzeranordnung 5 zu dem Ausgangssignal A2 der Vergleicheranordnung 2 addiert oder das Begrenzerausgangssignal A5 von dem Ausgangssignal A2 der Vergleicheranordnung 2 subtrahiert und das Ergebnis als Ausgangssignal A6 bereitstellt.

Der Subtrahier- und Addieranordnung 6 ist eine Auswahlschaltung 7 nachgeschaltet, der das erste Steuersignal S1, der dritte Bildinformationswert L3 sowie das Ausgangssignal A6 der zweiten Subtrahieranordnung 6 zugeführt ist. Die Auswahlschaltung 7 gibt nach Maßgabe des ersten Steuersignals S1 den dritten Bildinformationswert L3 oder das Ausgangssignal A6 der zweiten Subtrahieranordnung 6 als interpolierten Bildinformationswert Lx aus.

Optional ist zwischen die erste Subtrahieranordnung 3 und die Begrenzerschaltung 5 eine weitere Begrenzerschaltung 4 geschaltet, die beispielsweise nach Maßgabe eines von extern Steuersignals Sext das Ausgangssignal A3 der ersten Subtrahieranordnung 3 auf Null begrenzt, wenn der Wert dieses Ausgangssignals A3 kleiner als ein vorgegebener Grenzwert liegt, wobei dieser Grenzwert beispielsweise so gewählt ist, dass er einer üblichen Rauschsignalamplitude entspricht. Der Grenzwert ist dabei so gewählt, dass sich nur für kleine Differenzen, insbesondere für Differenzen, die wesentlich kleiner sind als der Intervallabstand eine Null am Ausgang der Begrenzeranordnung 4 ergibt. Vorteilhafterweise ist der Grenzwert abhängig von dem Intervallabstand ausgewählt.

Anstelle der Begrenzeranordnung 4 ist bei einer weiteren Ausführungsform eine Verstärkungsanordnung oder eine Dämpfungsanordnung vorgesehen, die das Differenzsignal verstärkt oder dämpft. Der Verstärkungsfaktor oder der Dämpfungsfaktor können dabei vorzugsweise von außen eingestellt werden. Weiterhin besteht die Möglichkeit eine Begrenzeranordnung zusammen mit einer Verstärkungsanordnung oder Dämpfungsanordnung vorzusehen.

Figur 5 zeigt eine Abwandlung der in Figur 4 dargestellten Vorrichtung, wobei der Vergleicheranordnung 2 in diesem Ausführungsbeispiel eine Sortier- und Intervallbildungseinheit 11 vorgeschaltet ist, der neben dem ersten und zweiten Bildinformationswert L10, L20 mehrere erste Bildinformationswerte L11 L12, L13, L14 und mehrere zweite Bildinformationswerte L21, L22, L23, L24 zugeführt sind, die jeweils Bildinformationswerte am Anfangspunkt eines Bewegungsvektors in dem ersten Bild und am Endpunkt eines Bewegungsvektors in dem zweiten Bild sind, wobei die einem Bewegungsvektor zugeordneten Bildinformationswerte ein Bildinformationswertepaar bilden. Derartige Paare sind in dem Beispiel gemäß Figur 5: (L10, L20), (L11, L21), (L12, L22),... Die Sortier- und Intervallbildungseinheit 11 ist dabei dazu ausgebildet, das Bildinformationswertepaar zu ermitteln, das das betragsmäßig kleinste Werteintervall aufspannt, wobei der größere Wert dieses Paares als Wert Max und der kleinere Wert dieses Paares als Wert Min am Ausgang des Filters ausgegeben werden und diese beiden Werte in der oben erläuterten Weise weiterverarbeitet werden.

Sind die Intervalle mehrerer Bildinformationswertepaare gleich, so wird ein Wertepaar beispielsweise unter Verwendung einer Rangfolge ausgewählt. Diese Rangfolge berücksichtigt beispielsweise die Herkunft des Bewegungsvektors, der zur Ermittlung der Bildinformationswerte eines Wertepaares verwendet wurde. Spannen zwei Wertepaare dieselbe Intervallbreite auf und basiert ein Wertepaar auf einem Bewegungsvektor, der anhand eines zeitlich früheren Bildes ermittelt wurde und entstammt ein Wertepaar einem Vektor, der beispielsweise anhand eines örtlich benachbarten Bildbereiches desselben Bildes ermittelt wurde, so wird dem Wertepaar des örtlich benachbarten Vektors der Vorzug gegeben. Diese Rangfolge berücksichtigt also die "zeitliche und örtliche Herkunft" des einem Wertepaares zugrunde liegenden Vektors.

Figur 6 zeigt ein weiteres Ausführungsbeispiel einer erfindungsgemäßen Vorrichtung zur Erzeugung eines interpolierten Bildinformationswertes Lx aus wenigstens einem ersten Bildinformationswert L10, einem zweiten Bildinformationswert L20 und einem dritten Bildinformationswert L3. Die Vorrichtung umfasst am Eingang eine Sortiervorrichtung 1, die den größeren der beiden Werte als Wert Max und den kleineren der beiden Werte als Wert Min am Ausgang zur Verfügung stellt. Die erfindungsgemäße Vorrichtung umfasst außerdem einen ersten Subtrahierer mit Betragsbildung 21, dem der größere dieser beiden Werte, nämlich Max = max(L10,L20), und der dritte Bildinformationswert L3 zugeführt sind und der ein Ausgangssignal A21 bereitstellt, welches der betragsmäßigen Differenz zwischen dem Bildinformationswert Max und dem dritten Bildinformationswert L3 entspricht. Die Vorrichtung umfasst einen weiteren Subtrahierer mit Betragsbildung 22, dem der kleinere der Bildinformationswerte L10, L20, nämlich der Bildinformationswert Min = min(L10,L20) und der dritte Bildinformationswert L3 zugeführt sind und der ein Ausgangssignal A22 bereitstellt, welches dem Betrag der Differenz zwischen dem Bildinformationswert Min und dem dritten Bildinformationswert L3 entspricht.

Optional ist dem ersten Subtrahierer 21 eine Begrenzeranordnung 41 und dem zweiten Subtrahierer 22 eine Begrenzeranordnung 42 nachgeschaltet, die jeweils die Subtrahiererausgangssignale A21, A22 beispielsweise auf Null begrenzen, wenn die Amplituden dieser Signale A21, A22 unterhalb einer vorgegebenen Grenze liegen, wobei diese Grenze beispielsweise mittels eines externen Signals abhängig von einer Rauschamplitude einstellbar ist. An Ausgängen der Begrenzer 41, 42 stehen Ausgangssignale A41, A42 zur Verfügung, die weiteren Begrenzeranordnungen 51, 52 zugeführt sind. Sind die optionalen Begrenzeranordnungen 41, 42 nicht vorhanden, so entspricht das Signal A41 dem Signal A21 und das Signal A42 entspricht dem Signal A22.

Anstelle der Begrenzeranordnung 4 kann auch hier eine Verstärkungsanordnung oder eine Dämpfungsanordnung mit von außen einstellbarer Verstärkung/Dämpfung vorgesehen werden.

Die Begrenzerschaltungen 51, 52 sind dazu ausgebildet, das ihnen jeweils zugeführte Signal A41 bzw. A21 und A42 bzw. A22 nach oben hin auf einen durch ein Signal A53 vorgegebenen Wert zu begrenzen, wobei diese Signal A53 durch eine Berechnungsschaltung 53 vorgegeben ist, die die Hälfte des Betrags der Differenz zwischen dem größeren Bildinformationswert Max und dem kleineren Bildinformationswert Min ermittelt.

Sind der erste und zweite Bildinformationswert L10, L20 gleich groß, so liegen an den Eingängen der Subtrahierer 21, 22 gleiche Signale an.

An den Begrenzerschaltungen 51, 52 stehen jeweils Ausgangssignale A51, A52 zur Verfügung, wobei ein Ausgangssignal A51 des Begrenzers 51 zusammen mit dem Bildinformationswert Max einem ersten weiteren Subtrahierer 31 zugeführt ist, der ein Ausgangsignal A31 bereitstellt, welches der Differenz zwischen dem Bildinformationswert Max und dem Begrenzerausgangssignal A51 entspricht. Das Ausgangssignal A52 des zweiten Begrenzers 52 ist zusammen mit dem Bildinformationswert Min einem Addierer 32 zugeführt, der ein Ausgangssignal A32 bereitstellt, welches der Summe des Bildinformationswertes Min und des Ausgangssignals des Begrenzers 52 entspricht.

Einer Vergleichereinheit 80 sind das Ausgangssignal A51 des Begrenzers 51 sowie das Ausgangssignal 52 des Begrenzers 52 zugeführt, wobei die Vergleicheranordnung 80 ein Steuersignal S80 bereitstellt, welches angibt, welches der beiden Ausgangssignale A51, A52 kleiner ist. Dieses Steuersignal S80 ist zusammen mit den Ausgangswerten A31, A32 der Subtrahieranordnung 31 bzw. der Addieranordnung 32 einer ersten Auswahlschaltung 90 zugeführt, wobei die Auswahlschaltung nach Maßgabe des Steuersignals S80 eines der Ausgangssignale A31, A32 als Ausgangssignal 90 bereitstellt. Die Auswahlschaltung 90 gibt dabei das Ausgangssignal A31 der Subtrahieranordnung 31 als Ausgangssignal A90 weiter, wenn das Steuersignal S80 darauf hindeutet, dass das Ausgangssignal A51 des Begrenzers 51 kleiner ist als das Ausgangssignal A52 des Begrenzers 52. Entsprechend gibt die Auswahlschaltung 90 das Ausgangssignal A32 des Addierers 32 als Ausgangssignal A90 weiter, wenn das Steuersignal S80 angibt, dass das Begrenzerausgangssignal A52 kleiner ist als das Begrenzerausgangssignal A51. Wenn die Signale A51 und A52 gleich groß sind, wird ein beliebiger der beiden Werte, entweder A31 oder A31 in der Auswahlschaltung 90 ausgewählt. Dieses Ausgangssignal A90 entspricht dem interpolierten Bildinformationswert Lx, wenn keine Begrenzungsschaltungen 41, 42 vorhanden sind.

Sind derartige Begrenzungsschaltungen 41, 42 vorhanden, so umfasst die Vorrichtung weiterhin eine Vergleicheranordnung 60 und eine weitere Auswahlschaltung 70, die in der Figur 6 entsprechend der Begrenzungsschaltungen 41, 42 als optionale Schaltungen gestrichelt dargestellt sind. Der Vergleicheranordnung 60, sind die Bildinformationswerte Max, Min sowie der dritte Bildinformationswert L3 zugeführt, wobei die Vergleicherschaltung 60 ein Steuersignal S60 bereitstellt, das angibt, ob der dritte Bildinformationswert L3 innerhalb eines durch den ersten und zweiten Bildinformationswert L10, L20 bzw. durch die Werte Max, Min gegebenen Intervalls liegt.

Das Steuersignal S60 der Vergleicheranordnung 60 sowie das Ausgangssignal A90 der ersten Auswahlschaltung 90 sowie der dritte Bildinformationswert L3 sind der weiteren Auswahlschaltung 70 zugeführt, die nach Maßgabe des Steuersignals S60 entweder den dritten Bildinformationswert L3 oder das Ausgangssignal der ersten Auswahlschaltung 90 als interpolierten Bildinformationswert Lx ausgibt.

Figur 7 zeigt eine Abwandlung der in Figur 6 dargestellten Vorrichtung, bei der der erste und zweite Bildinformationswert Max, Min entsprechend der anhand von Figur 5 erläuterten Weise durch die Sortier- und Intervallbildungseinrichtung 11 aus dem ersten und zweiten Bildinformationswert und weiteren ersten und zweiten Bildinformationswerten L11-L14 und L21-L24 ermittelt werden.

Bezugszeichenliste

| | |
|---|---|
| 1 | Sortiereinrichtung |
| 11 | Sortier- und Intervallbildungseinrichtung |
| 2 | Vergleicheranordnung |
| 21, 22 | Subtrahieranordnung mit Betragsbildung |
| 3 | Subtrahieranordnung |
| 31 | Subtrahieranordnung |
| 32 | Addieranordnung |
| 4 | Begrenzeranordnung |
| 41, 42 | Begrenzeranordnung |

| | |
|---|---|
| 5 | Begrenzeranordnung |
| 51, 52 | Begrenzeranordnung |
| 6 | Subtrahier- und Addieranordnung |
| 60 | Vergleicherschaltung |
| 7 | Auswahlschaltung |
| 70 | Auswahlschaltung |
| 80 | Vergleicherschaltung |
| 90 | Auswahlschaltung |
| A21, A22 | Subtrahiererausgangssignale |
| A31 | Subtrahiererausgangssignal |
| A32 | Addiererausgangssignal |
| A41, A42 | Begrenzerausgangssignale |
| A51, A52 | Begrenzerausgangssignale |
| A90 | Schaltung-Ausgangssignal |
| L1, L2, L3 | Bildinformationswerte |
| L10-L14 | Bildinformationswerte |
| L20-L24 | Bildinformationswerte |
| Max | erster Bildinformationswert |
| Min | zweiter Bildinformationswert |
| S60 | Steuersignal |
| S80 | Steuersignal |

## Patentansprüche

1. Verfahren zur bewegungsvektorgestützten Interpolation eines Bildpunktes in einem zeitlich oder räumlich zwischen einem ersten und einem zweiten Bild (A1, B1) liegenden Zwischenbild, das folgende Verfahrensschritte umfasst:

    - Zuordnen wenigstens eines ersten und eines zweiten Bewegungsvektors (vec1, vec2), zu dem zu interpolierenden Bildpunkt (Px), wobei jedem Bewegungsvektor (vec1, vec2) ein Bildpunkt (P1, P3) in dem ersten Bild (A1) und ein Bildpunkt (P2, P4) in dem zweiten Bild (B1) zugeordnet ist,
    - Ermitteln eines ersten Bildinformationswertes (L10) anhand des Bildinformationswertes wenigstens eines ersten Bildpunktes (P1), der dem wenigstens einen ersten Bewegungsvektor (vec1) in dem ersten Bild (A1) zugeordnet ist, und Ermitteln eines zweiten Bildinformationswertes (L20) anhand des Bildinformationswertes wenigstens eines zweiten Bildpunktes (P2), der dem wenigstens einen ersten Bewegungsvektor (vec1) in dem zweiten Bild (B1) zugeordnet ist,
    - Ermitteln eines ersten weiteren Bildinformationswertes (L30) anhand des Bildinformationswertes eines dritten Bildpunktes (P3) am Anfangspunkt des zweiten Bewegungsvektors (vec2) in dem ersten Bild (A1) und Ermitteln eines zweiten weiteren Bildinformationswertes (L40) anhand des Bildinformationswertes eines vierten Bildpunktes (P4) am Ende des zweiten Bewegungsvektors (vec2) in dem zweiten Bild (B1),
    - Erzeugen eines dritten Bildinformationswertes (L3) durch Mischen des ersten weiteren Bildinformationswertes (L30) und des zweiten weiteren Bildinformationswertes (L40),

    **gekennzeichnet durch**

    - Ermitteln eines **durch** den ersten und zweiten Bildinformationswert (L10, L20) gegebenen Intervalls,
    - Ermitteln der Position des dritten Bildinformationswertes (L3) bezogen auf die Intervallgrenzen (L10, L20),
    - Auswählen des dritten Bildinformationswertes (L3) als Bildinformationswert (Lx) des interpolierten Bildpunktes (Px), wenn der dritte Bildinformationswert (L3) innerhalb des Intervalls liegt,
    - Ermitteln des Bildinformationswertes (Lx) des zu interpolierenden Bildpunktes (Px) **durch** folgende Verfahrensschritte, wenn der dritte Bildinformationswert (L3) außerhalb des Intervalls liegt:

        a) Bestimmen des mathematischen Abstandes des dritten Bildinformationswertes (L3) zu der nächstliegenden Intervallgrenze (L10; L20),
        b) Ermitteln eines Bildinformationswertes, der um den Wert des in Schritt a) ermittelten Abstandes von der nächstliegenden Intervallgrenze (L10; L20) entfernt und innerhalb des Intervalls liegt, und Auswählen dieses Bildinformationswertes als Bildinformationswertes (Lx) des interpolierten Bildpunktes (Px).

2. Verfahren nach Anspruch 1, bei dem der Mittelwert zwischen dem ersten Bildinformationswert (L10) und dem zweiten Bildinformationswert (L20) als interpolierter Bildinformationswert (Lx) ausgewählt wird, wenn der dritte Bildinformationswert (L3) außerhalb des durch den ersten und zweiten Bildinformationswert (L10, L20) gegebenen Intervalls liegt und der Abstand des dritten Bildinformationswertes (L3) zu der nächstliegenden Intervallgrenze größer als die Hälfte der Intervallbreite ist.

3. Verfahren nach Anspruch 1 oder 2, bei dem in Schritt a) der mathematische Abstand zu Null gesetzt wird, wenn der mathematische Abstand kleiner als ein vorgegebener Schwellenwert ist.

4. Verfahren nach Anspruch 3, bei dem der Grenzwert kleiner als die halbe Intervallbreite ist.

5. Verfahren nach Anspruch 1 oder 2, bei dem in Schritt a) der mathematische Abstand vergrößert (verstärkt) oder verkleinert (gedämpft) wird.

6. Verfahren nach einem der vorangehenden Ansprüche, bei dem der zweite Verschiebungsvektor (vec2) ein Nullvektor ist.

7. Verfahren nach einem der vorangehenden Ansprüche, bei dem der dritte Bildinformationswert (L3) aus dem Mittelwert des ersten und zweiten weiteren Bildinformationswertes (L30, L40) gebildet ist.

8. Verfahren nach einem der vorangehenden Ansprüche, das folgende Verfahrensschritte zur Ermittlung des ersten und zweiten Bildinformationswertes (L10, L20) umfasst:

- Auswählen mehrerer erster Bewegungsvektoren (vec1) und Ermitteln der Bildinformationswerte von Bildpunkten, die diesen Bewegungsvektoren in dem ersten Bild (A1) zugeordnet sind, und Ermitteln der Bildinformationswerte, die diesen Bewegungsvektoren in dem zweiten Bild (B1) zugeordnet sind,
- Auswählen eines der ersten Bildinformationswerte als ersten Bildinformationswert und Auswählen eines der zweiten Bildinformationswerte als zweiten Bildinformationswert.

9. Verfahren nach Anspruch 8, das folgende weitere Verfahrensschritte umfasst:

- Ermitteln der Intervalle zwischen jedem der Bildinformationswerten der Bildpunkte, die den ersten Bewegungsvektoren in dem ersten Bild (A1) zugeordnet sind, und jedem der Bildinformationswerte der Bildpunkte, die den ersten Bewegungsvektoren in dem zweiten Bild (B1) zugeordnet sind, und Auswählen der beiden Bildinformationswerte als ersten und zweiten Bildinformationswert (L10, L20), zwischen denen das kleinste Intervall gebildet ist oder zwischen denen das größte Intervall gebildet ist.

10. Verfahren nach einem der vorangehenden Ansprüche, das folgende Verfahrensschritte zur Ermittlung des ersten und zweiten Bildinformationswertes (L10, L20) umfasst:

- Auswählen mehrerer erster Bewegungsvektoren (vec1) und Ermitteln der Bildinformationswerte von Bildpunkten (L11, L12, L13, L14) die diesen Bewegungsvektoren in dem ersten Bild (A1) zugeordnet sind, und Ermitteln der Bildinformationswerte (L21, L22, L23, L24), die diesen Bewegungsvektoren in dem zweiten Bild (B1) zugeordnet sind,
- Filtern der anhand der Bewegungsvektoren ermittelten Bildinformationswerte (L11 - L14, L21 - L24) zur Erzeugung eines Zwischenwertes,
- Auswählen der einem der ersten Bewegungsvektoren (vec1) zugeordneten Bildinformationswerte und Auswählen aus einer Menge mit diesen beiden Bildinformationswerten und dem Zwischenwert die beiden Werte, die das größte Intervall aufspannen als erste und zweite Bildinformationswerte (Max, Min).

11. Vorrichtung zur Bereitstellung eines Bildinformationswertes eines interpolierten Bildpunktes, die folgende Merkmale aufweist:

- eine Vergleichereinheit (2), der aus einem ersten und zweiten Bildinformationswert (L10, L20) resultierende Bildinformationswerte (Max, Min) zugeführt sind, und die ein erstes Steuersignal (S1) bereitstellt, das anzeigt, ob ein dritter Bildinformationswert (L3) innerhalb eines durch den ersten und zweiten Bildinformationswert (L10, L20) gegebenen Intervalls liegt, ein zweites Steuersignal (S2) bereitstellt, das anzeigt, ob der dritte Bildinformationswert (L3) größer als die obere oder kleiner als die untere Intervallgrenze ist, und die als Ausgangssignal (A2) den zu dem dritten Bildinformationswert (L3) nächstliegenden ersten oder zweiten Bildinformationswert bereitstellt, wenn der dritte Bildinformationswert (L3) außerhalb des Intervalls liegt,
- eine Subtrahieranordnung (3), die die Differenz zwischen dem Ausgangssignal (A2) der Vergleichereinheit und dem dritten Bildinformationswert (L3) und den Betrag dieser Differenz bildet und als Ausgangssignal (A3) bereitstellt,
- eine Begrenzeranordnung (5), der das Ausgangssignal (A3) der Subtrahieranordnung (3) zugeführt ist, und die das Ausgangssignal (A3) der Subtrahieranordnung (3) auf einen vorgegebenen Grenzwert begrenzt und das begrenzte Signal als Ausgangssignal (A5) bereitstellt,
- eine zweite Subtrahieranordnung (6), der das Ausgangssignal der Vergleicheranordnung (2), das zweite Steuersignal (S2) der Vergleicheranordnung und das Ausgangssignal (A5) der Begrenzeranordnung (5) zugeführt ist, und die nach Maßgabe des zweiten Steuersignals (S2) das Ausgangssignal (A5) der Begrenzeranordnung (5) zu dem Ausgangssignal (A2) der Vergleicheranordnung (2) addiert oder von diesem (A2) subtrahiert und diese Summe oder Differenz als Ausgangssignal (A6) bereitstellt,
- eine Auswahlschaltung (7) der das Ausgangssignal (A6) der zweiten Subtrahieranordnung (6), das erste Steuersignal (S1) der Vergleicheranordnung (2) und der dritte Bildinformationswert (L3) zugeführt sind und die nach Maßgabe des ersten Steuersignals (S1) das Ausgangssignal (A6) der zweiten Subtrahieranordnung (6) oder den dritten Bildinformationswert (L3) als interpolierten Bildinformationswert (Lx) ausgibt,
- eine Mischeinrichtung (16), die den dritten Bildinformationswert (L3) aus wenigstens einem ersten und zweiten weiteren Bildinformationswert (L30, L40) durch Mischen dieser Bildinformationswerte bereitstellt.

**12.** Vorrichtung nach Anspruch 11, bei der der Vergleicheranordnung (2) eine Sortier- und Intervallbildungseinrichtung (11) vorgeschaltet ist, der mehrere erste Bildinformationswerte (L11-L14) und mehrere zweite Bildinformationswerte (L21-L24) zugeführt sind, die jeweils einander zugeordnet sind und Bildinformationswertepaare bilden, wobei die Sortier- und Intervallbildungseinrichtung eines der Wertepaare auswählt und einen der beiden Bildinformationswerte des Paares als ersten Bildinformationswert (Max) und den anderen Bildinformationswert des Paares als zweiten Bildinformationswert (Min) ausgibt.

**13.** Vorrichtung nach Anspruch 12, bei der die Sortier- und Intervallbildungseinrichtung (11), jeweils zwischen dem ersten Bildinformationswert (L11-L14) und dem zweiten Bildinformationswert (L21-L24) eines Wertepaares ein Intervall ermittelt und das Wertepaar auswählt, zwischen dessen Werten das kleinste Intervall gebildet ist.

**14.** Vorrichtung nach Anspruch 11 oder 12, bei der der Grenzwert, auf welchen die Begrenzeranordnung (5) das Ausgangssignal (A3) der Subtrahieranordnung (3) begrenzt, der Hälfte der Differenz zwischen dem ersten und zweiten Bildinformationswert (L1, L2) entspricht.

**15.** Vorrichtung zur Bereitstellung eines Bildinformationswertes eines interpolierten Bildpunktes, die folgende Merkmale aufweist:

- eine erste Subtrahieranordnung (21), der ein erster Bildinformationswert (Max) als Eingangssignal zugeführt ist, und eine zweite Subtrahiereinrichtung (22), der ein zweiter Bildinformationswert (Min) als Eingangssignal zugeführt ist, und denen jeweils ein dritter Bildinformationswert (L3) zugeführt ist, wobei die Subtrahieranordnungen (21, 22) als Ausgangssignale (A21, A22) jeweils den Betrag einer Differenz zwischen dem jeweiligen Eingangssignal (Max, Min) und dem dritten Bildinformationswert (L3) bereitstellen,
- eine der ersten Subtrahieranordnung (21) nachgeschaltete erste Begrenzeranordnung (51) und eine der zweiten Subtrahieranordnung (22) nachgeschaltete zweite Begrenzeranordnung (52), wobei die Begrenzeranordnungen (51, 52) die Ausgangssignale (A21, A22) der Subtrahieranordnungen (21, 22) jeweils auf ein vorgegebenen Grenzwert begrenzen,
- eine der ersten Begrenzeranordnung (51) nachgeschaltete weitere Subtrahieranordnung (31), die ein am Ausgang der ersten Begrenzeranordnung (A51) anliegendes Signal von dem ersten Bildinformationswert (Max) subtrahiert, und eine der zweiten Begrenzeranordnung (52) nachgeschaltete Addieranordnung (32), die ein am Ausgang der zweiten Begrenzeranordnung (52) anliegendes Signal (A52) zu dem zweiten Bildinformationswert (Min) addiert,
- eine Vergleicheranordnung (80), der das erste und zweite Begrenzerausgangssignal (A51, A52) zugeführt ist und die abhängig von einem Vergleich dieser Signale (A51, A52) ein Steuersignal (S80) bereitstellt,
- eine erste Auswahlschaltung (90) der das Steuersignal (S80) der Vergleicheranordnung (80) sowie ein Ausgangssignal (A31) der weiteren Subtrahieranordnung (31) und ein Ausgangssignal (A32) der Addieranordnung (32) zugeführt sind und die nach Maßgabe des Steuersignals (S80) eines dieser beiden Ausgangssignale als Ausgangssignal (A90) an ihrem Ausgang zur Verfügung stellt,

- eine zweite Vergleicheranordnung (60), der die ersten und zweiten Bildinformationswerte (L10, L20) und ein dritter Bildinformationswert (L3) zugeführt sind, und die abhängig von einem Vergleich dieser Signale ein zweites Steuersignal (S60) bereitstellt,
- eine zweite Auswahlschaltung (70), der der dritte Bildinformationswert (L3), das Ausgangssignal der ersten Auswahlschaltung (90) und des zweite Steuersignal (S60) zugeführt sind, und die abhängig von dem zweiten Steuersignal (S60) den dritten Bildinformationswert (L3) oder das Ausgangssignal (A90) der ersten Auswahlschaltung (90) als interpolierten Bildinformationswert (Lx) ausgibt,
- eine Mischeinrichtung (16), die den dritten Bildinformationswert (L3) aus wenigstens einem ersten und zweiten weiteren Bildinformationswert (L30, L40) durch Mischen dieser Bildinformationswerte bereitstellt.

**16.** Vorrichtung nach Anspruch 15, bei der den Subtrahieranordnungen (21, 22) eine Sortiereinrichtung (1; 11) vorgeschaltet ist, der wenigstens ein Bildinformationswertepaar (L10, L20; L1, L2, Lf) zugeführt ist, wobei die Sortieranordnung (1) ein Wertepaar auswählt und den größeren Wert des Wertepaares als ersten Bildinformationswert (Max) und den kleineren Wert des Wertepaares als zweiten Bildinformationswert (Min) ausgibt.

**17.** Vorrichtung nach Anspruch 16, bei dem die Sortiervorrichtung zu jedem Wertepaar ein Intervall zwischen den Bildinformationswerten des Wertepaars ermittelt und das Wertepaar auswählt, zwischen dessen Werten das kleinste Intervall gebildet ist.

## Claims

**1.** A method for motion-vector supported interpolation of a pixel in an intermediate image which, as seen in a temporal or spatial respect, lies between a first and a second image (A1, B1), the method comprising the following steps:

- allocating at least one first and one second motion vector (vec1, vec2) to the pixel (Px) to be interpolated, each motion vector (vec1, vec2) having a pixel (P1, P3) in the first image (A1) and a pixel (P2, P4) in the second image (B1) allocated thereto,
- determining a first image information value (L10) based on the image information value of at least one first pixel (P1) which is allocated to the at least one first motion vector (vec1) in the first image (A1), and determining a second image information value (L20) based on the image information value of at least one second pixel (P2) which is allocated to the at least one first motion vector (vec1) in the second image (B1),
- determining a first additional image information value (L30) based on the image information value of a third pixel (P3) at the starting point of the second motion vector (vec2) in the first image (A1) and determining a second additional image information value (L40) based on the image information value of a fourth pixel (P4) at the end of the second motion vector (vec2) in the second image (B1),
- generating a third image information value (L3) by mixing the first additional image information value (L30) and second additional image information value (L40),

**characterized by**

- determining an interval defined by the first and second image information values (L10, L20),
- determining the position of the third image information value (L3) related to the interval limits (L10, L20),
- selecting the third image information value (L3) as the image information value (Lx) of the interpolated pixel (Px) if the third image information value (L3) lies within the interval,
- determining the image information value (Lx) of the pixel (Px), to be interpolated, by the following steps if the third image information value (L3) lies outside the interval:

a) identifying the mathematical distance of the third image information value (L3) to the closest interval limit (L10; L20),
b) determining an image information value which is spaced from the closest interval limit (L10; L20) by the value of the distance identified in step a) and lies within the interval, and selecting this image information value as the image information value (Lx) of the interpolated pixel (Px).

**2.** The method according to claim 1, in which the average value between the first image information value (L10) and the second image information value (L20) is selected as the interpolated image information value (Lx) if the third image information value (L3) lies outside the interval defined by the first and second image information values (L10, L20), and the distance of the third image information value (L3) to the closest interval limit is larger than half the interval width.

3. The method according to claim 1 or 2, in which the mathematical distance is set to zero in step a) if the mathematical distance is smaller than a given threshold value.

4. The method according to claim 3, in which the threshold value is smaller than half the interval width.

5. The method according to claim 1 or 2, in which the mathematical distance is increased (amplified) or decreased (attenuated) in step a).

6. The method according to any of the preceding claims, in which the second displacement vector (vec2) is a zero vector.

7. The method according to any of the preceding claims, in which the third image information value (L3) is derived from the average value of the first and second additional image information values (L30, L40).

8. The method according to any of the preceding claims, comprising the following steps for determining the first and second image information values (L10, L20):

- selecting a plurality of first motion vectors (vec1) and determining the image information values of pixels which are allocated to these motion vectors in the first image (A1), and determining the image information values which are allocated to these motion vectors in the second image (B1),
- selecting one of the first image information values as the first image information value and selecting one of the second image information values as the second image information value.

9. The method according to claim 8, comprising the following additional steps:

- determining the intervals between each of the image information values of the pixels which are allocated to the first motion vectors in the first image (A1), and each of the image information values of the pixels which are allocated to the first motion vectors in the second image (B1), and selecting the two image information values as the first and second image information values (L10, L20) between which the smallest interval is formed or between which the largest interval is formed.

10. A method according to any of the preceding claims, comprising the following steps for determining the first and second image information values (L10, L20):

- selecting a plurality of first motion vectors (vec1) and determining the image information values of pixels (L11, L12, L13, L14) which are allocated to the these motion vectors in the first image (A1), and determining the image information values (L21, L22, L23, L24) which are allocated to these motion vectors in the second image (B1),
- filtering the image information values (L11 - L14, L21 - L24) which have been determined on the basis of the motion vectors, for the purpose of generating an intermediate value,
- selecting the image information values allocated to one of the first motion vectors (vec1) and selecting, from a set comprising these two image information values and the intermediate value, the two values which span the largest interval as the first and second image information values (Max, Min).

11. A device for making available an image information value of an interpolated pixel, comprising the following features:

- a comparator unit (2) which is fed with image information values (Max, Min) resulting from a first and a second image information value (L10, L20) and provides a first control signal (S1) indicating whether a third image information value (L3) lies within an interval defined by the first and second image information values (L10, L20), provides a second control signal (S2) indicating whether the third image information value (L3) is larger than the upper or smaller than the lower interval limit, and which provides the first or second image information value closest to the third image information value (L3) as the output signal (A2) if the third image information value (L3) lies outside the interval,
- a subtraction device (3) which generates the difference between the output signal (A2) of the comparator unit and the third image information value (L3) as well as the absolute value of this difference, and provides it as an output signal (A3),
- a limiter device (5) which is fed with the output signal (A3) of the subtraction device (3) and limits the output signal (A3) of the subtraction device (3) to a given limit value and provides the limited signal as an output signal (A5),

- a second subtraction device (6) which is fed with the output signal of the comparator unit (2), the second control signal (S2) of the comparator unit and the output signal (A5) of the limiter device (5), and which, according to the second control signal (S2), adds the output signal (A5) of the limiter device (5) to the output signal (A2) of the comparator unit (2) or subtracts it therefrom (A2) and provides said sum or difference as an output signal (A6),
- a selection circuit (7) which is fed with the output signal (A6) of the second subtraction device (6), the first control signal (S1) of the comparator unit (2) and the third image information value (L3), and which, according to the first control signal (S1), delivers the output signal (A6) of the second subtraction device (6) or the third image information value (L3) as the interpolated image information value (Lx),
- a mixing device (16) which provides the third image information value (L3) from at least one first and second additional image information value (L30, L40) by mixing these image information values.

**12.** The device according to claim 11, in which the comparator unit (2) has a sorting and interval-forming means (11) arranged upstream of it, which is fed with a plurality of first image information values (L11-L14) and a plurality of second image information values (L21-L24) which are allocated to each other and form pairs of image information values, the sorting and interval-forming means selecting one of the pairs of values and delivering one of the two image information values of the pair as the first image information value (Max) and the other image information value of the pair as the second image information value (Min).

**13.** The device according to claim 12, in which the sorting and interval-forming means (11) determines an interval respectively between the first image information value (L11-L14) and the second image information value (L21-L24) of a pair of values and selects the pair of values which forms the smallest interval between its values.

**14.** The device according to claim 11 or 12, in which the limit value, to which the limiter device (5) limits the output signal (A3) of the subtraction device (3), corresponds to half the difference between the first and second image information values (L1, L2).

**15.** A device for providing an image information value of an interpolated pixel, comprising the following features:

- a first subtraction device (21) which is fed with a first image information value (Max) as an input signal, and a second subtraction device (22) which is fed with a second image information value (Min) as an input signal, and which are both fed with a third image information value (L3), the subtraction devices (21, 22) each providing the absolute value of a difference between the respective input signal (Max, Min) and the third image information value (L3) as output signals (A21, A22),
- a first limiter device (51) provided downstream of the first subtraction device (21) and a second limiter device (52) provided downstream of the second subtraction device (22), the limiter devices (51, 52) each limiting the output signals (A21, A22) of the subtraction devices (21, 22) to a given limit value,
- a further subtraction device (31) which is provided downstream of the first limiter device (51) and subtracts a signal applied to the output of the first limiter device (A51) from the first image information value (Max), and an adding device (32) which is provided downstream of the second limiter device (52) and adds a signal (A52) applied to the output of the second limiter device (52) to the second image information value (Min),
- a comparator unit (80) which is fed with the first and second limiter output signals (A51, A52) and provides a control signal (S80) depending on a comparison of these signals (A51, A52),
- a first selection circuit (90) which is fed with the control signal (S80) of the comparator unit (80) as well as an output signal (A31) of the additional subtraction device (31) and an output signal (A32) of the adding device (32), and which, according to the control signal (S80), provides one of these two output signals as an output signal (A90) at its output,
- a second comparator unit (60) which is fed with the first and second image information values (L10, L20) as well as a third image information value (L3), and which provides a second control signal (S60) depending on a comparison of these signals,
- a second selection circuit (70) which is fed with the third image information value (L3), the output signal of the first selection circuit (90) and the second control signal (S60), and delivers the third image information value (L3) or the output signal (A90) of the first selection circuit (90) as the interpolated image information value (Lx) depending on the second control signal (S60),
- a mixing device (16) providing the third image information value (L3) from at least one first and second additional image information value (L30, L40) by mixing these image information values.

16. The device according to claim 15, in which a sorting means (1; 11) is provided upstream of the subtraction devices (21, 22), which is fed with at least one image information pair of values (L10, L20; L1, L2, Lf), the sorting means (1) selecting a pair of values and delivering the larger value of the pair of values as the first image information value (Max) and the smaller value of the pair of values as the second image information value (Min).

17. The device according to claim 16, in which the sorting means determines, for each pair of values, an interval between the image information values of the pair of values and selects the pair of values which forms the smallest interval between its values.

## Revendications

1. Procédé d'interpolation par vecteurs de mouvement d'un point d'image dans une image intermédiaire située temporellement ou spatialement entre une première et une deuxième image (A1, B1), comportant les étapes de procédé suivantes :

   - affectation d'au moins un premier et un deuxième vecteur de mouvement (vec1, vec2) au point d'image à interpoler (Px), un point d'image (P1, P3) étant affecté à chaque vecteur de mouvement (vec1, vec2) dans la première image (A1) et un point d'image (P2, P4) étant affecté à chaque vecteur de mouvement (vec1, vec2) dans la deuxième image (B1),
   - détermination d'une première valeur d'information d'image (L10) à l'aide de la valeur d'information d'image d'au moins un premier point d'image (P1) qui est affecté à l'au moins un premier vecteur de mouvement (vec1) dans la première image (A1), et détermination d'une deuxième valeur d'information d'image (L20) à l'aide de la valeur d'information d'image d'au moins un deuxième point d'image (P2) qui est affecté à l'au moins un premier vecteur de mouvement (vec1) dans la deuxième image (B1),
   - détermination d'une première valeur d'information d'image supplémentaire (L30) à l'aide de la valeur d'information d'image d'un troisième point d'image (P3) au point de départ du deuxième vecteur de mouvement (vec2) dans la première image (A1) et détermination d'une deuxième valeur d'information d'image supplémentaire (L40) à l'aide de la valeur d'information d'image d'un quatrième point d'image (P4) à la fin du deuxième vecteur de mouvement (vec2) dans la deuxième image (B1),
   - génération d'une troisième valeur d'information d'image (L3) par mélange de la première valeur d'information d'image supplémentaire (L30) et de la deuxième valeur d'information d'image supplémentaire (L40),

   **caractérisé par** la

   - détermination d'un intervalle donné par la première et la deuxième valeur d'information d'image (L10, L20),
   - détermination de la position de la troisième valeur d'information d'image (L3) par rapport aux limites d'intervalle (L10, L20),
   - sélection de la troisième valeur d'information d'image (L3) comme valeur d'information d'image (Lx) du point d'image interpolé (Px) si la troisième valeur d'information d'image (L3) est située dans l'intervalle,
   - détermination de la valeur d'information d'image (Lx) du point d'image à interpoler (Px) par les étapes de procédé suivantes si la troisième valeur d'information d'image (L3) est située en dehors de l'intervalle :

     a) détermination de l'écart mathématique de la troisième valeur d'information d'image (L3) par rapport à la limite d'intervalle la plus proche (L10 ; L20),
     b) détermination d'une valeur d'information d'image qui est distante d'une valeur égale à l'écart déterminé à l'étape a) de la limite d'intervalle la plus proche (L10 ; L20) et qui est située dans l'intervalle, et sélection de cette valeur d'information d'image comme valeur d'information d'image (Lx) du point d'image interpolé (Px).

2. Procédé de la revendication 1, où la valeur moyenne entre la première valeur d'information d'image (L10) et la deuxième valeur d'information d'image (L20) est sélectionnée comme valeur d'information d'image interpolée (Lx) si la troisième valeur d'information d'image (L3) est située en dehors de l'intervalle donné par la première et la deuxième valeur d'information d'image (L10, L20) et l'écart de la troisième valeur d'information d'image (L3) par rapport à la limite d'intervalle la plus proche est supérieur à la moitié de la largeur d'intervalle.

3. Procédé selon la revendication 1 ou 2, où, à l'étape a), l'écart mathématique est mis à zéro si l'écart mathématique est inférieur à une valeur seuil prédéfinie.

**4.** Procédé selon la revendication 3, où la valeur seuil est inférieure à la demi-largeur d'intervalle.

**5.** Procédé selon la revendication 1 ou 2, où, à l'étape a), l'écart mathématique est augmenté (amplifié) ou diminué (atténué).

**6.** Procédé selon l'une des revendications précédentes, où le deuxième vecteur de déplacement (vec2) est un vecteur nul.

**7.** Procédé selon l'une des revendications précédentes, où la troisième valeur d'information d'image (L3) est formée à partir de la valeur moyenne de la première et de la deuxième valeur d'information d'image supplémentaire (L30, L40).

**8.** Procédé selon l'une des revendications précédentes, comportant les étapes de procédé suivantes pour déterminer la première et la deuxième valeur d'information d'image (L10, L20) :

- sélection de plusieurs premiers vecteurs de mouvement (vec1) et détermination des valeurs d'information d'image de points d'image qui sont affectés à ces vecteurs de mouvement dans la première image (A1), et détermination des valeurs d'information d'image qui sont affectées à ces vecteurs de mouvement dans la deuxième image (B1),
- sélection d'une des premières valeurs d'information d'image comme première valeur d'information d'image et sélection d'une des deuxièmes valeurs d'information d'image comme deuxième valeur d'information d'image.

**9.** Procédé selon la revendication 8, comportant les étapes de procédé supplémentaires suivantes :

- détermination des intervalles entre chacune des valeurs d'information d'image des points d'image qui sont affectés aux premiers vecteurs de mouvement dans la première image (A1) et chacune des valeurs d'information d'image des points d'image qui sont affectés aux premiers vecteurs de mouvement dans la deuxième image (B1), et sélection des deux valeurs d'information d'image entre lesquelles est formé l'intervalle le plus petit ou entre lesquelles est formé l'intervalle le plus grand comme première et deuxième valeur d'information d'image (L10, L20).

**10.** Procédé selon l'une des revendications précédentes, comportant les étapes de procédé suivantes pour déterminer la première et la deuxième valeur d'information d'image (L10, L20) :

- sélection de plusieurs premiers vecteurs de mouvement (vec1) et détermination des valeurs d'information d'image de points d'image (L11, L12, L13, L14) qui sont affectés à ces vecteurs de mouvement dans la première image (A1), et détermination des valeurs d'information d'image (L21, L22, L23, L24) qui sont affectées à ces vecteurs de mouvement dans la deuxième image (B1),
- filtrage des valeurs d'information d'image (L11 - L14, L21 - L24) déterminées à l'aide des vecteurs de mouvement pour générer une valeur intermédiaire,
- sélection des valeurs d'information d'image affectées à l'un des premiers vecteurs de mouvement (vec1) et sélection, à partir d'une quantité comprenant ces deux valeurs d'information d'image et la valeur intermédiaire, des deux valeurs qui ouvrent l'intervalle le plus grand comme première et deuxième valeur d'information d'image (Max, Min).

**11.** Dispositif destiné à fournir une valeur d'information d'image d'un point d'image interpolé, présentant les caractéristiques suivantes :

- une unité comparatrice (2) à laquelle sont amenées des valeurs d'information d'image (Max, Min) résultant d'une première et d'une deuxième valeur d'information d'image (L10, L20), et qui fournit un premier signal de commande (S1) qui indique si une troisième valeur d'information d'image (L3) est située dans un intervalle donné par la première et la deuxième valeur d'information d'image (L10, L20), qui fournit un deuxième signal de commande (S2) qui indique si la troisième valeur d'information d'image (L3) est supérieure à la limite d'intervalle supérieure ou inférieure à la limite d'intervalle inférieure, et qui fournit comme signal de sortie (A2) la première ou la deuxième valeur d'information d'image la plus proche de la troisième valeur d'information d'image (L3) si la troisième valeur d'information d'image (L3) est située en dehors de l'intervalle,
- un dispositif soustracteur (3) qui forme la différence entre le signal de sortie (A2) de l'unité comparatrice et la troisième valeur d'information d'image (L3) et le montant de cette différence et la fournit comme signal de sortie (A3),
- un dispositif limiteur (5) auquel est amené le signal de sortie (A3) du dispositif soustracteur (3), et qui limite le signal de sortie (A3) du dispositif soustracteur (3) à une valeur limite prédéfinie et fournit le signal limité comme signal de sortie (A5),
- un deuxième dispositif soustracteur (6) auquel sont amenés le signal de sortie du dispositif comparateur (2), le deuxième signal de commande (S2) du dispositif comparateur et le signal de sortie (A5) du dispositif limiteur (5), et qui, en fonction du deuxième signal de commande (S2), additionne le signal de sortie (A5) du dispositif limiteur (5) au signal de sortie (A2) du dispositif comparateur (2) ou le soustrait de celui-ci (A2) et fournit cette somme ou différence comme signal de sortie (A6),
- un circuit de sélection (7) auquel sont amenés le signal de sortie (A6) du deuxième dispositif soustracteur (6), le premier signal de commande (S1) du dispositif comparateur (2) et la troisième valeur d'information d'image (L3) et qui, en fonction du premier signal de commande (S1), sort le signal de sortie (A6) du deuxième dispositif soustracteur (6) ou la troisième valeur d'information d'image (L3) comme valeur d'information d'image interpolée (Lx),
- un dispositif mélangeur (16) qui fournit la troisième valeur d'information d'image (L3) à partir d'au moins une première et une deuxième valeur d'information d'image supplémentaire (L30, L40) par mélange de ces valeurs d'information d'image.

**12.** Dispositif selon la revendication 11, où, en amont du dispositif comparateur (2), est placé un dispositif de tri et de formation d'intervalle (11) auquel sont amenées plusieurs premières valeurs d'information d'image (L11-L14) et plusieurs deuxièmes valeurs d'information d'image (L21-L24) qui sont affectées les unes aux autres respectivement et forment des paires de valeurs d'information d'image, le dispositif de tri et de formation d'intervalle sélectionnant l'une des paires de valeurs et sortant l'une des deux valeurs d'information d'image de la paire comme première valeur d'information d'image (Max) et l'autre valeur d'information d'image de la paire comme deuxième valeur d'information d'image (Min).

**13.** Dispositif selon la revendication 12, où le dispositif de tri et de formation d'intervalle (11) détermine, entre la première valeur d'information d'image (L11-L14) et la deuxième valeur d'information d'image (L21-L24) d'une paire de valeurs respectivement, un intervalle et sélectionne la paire de valeurs entre les valeurs desquelles est formé l'intervalle le plus petit.

**14.** Dispositif selon la revendication 11 ou 12, où la valeur limite à laquelle le dispositif limiteur (5) limite le signal de sortie (A3) du dispositif soustracteur (3) équivaut à la moitié de la différence entre la première et la deuxième valeur d'information d'image (L1, L2).

**15.** Dispositif destiné à fournir une valeur d'information d'image d'un point d'image interpolé, présentant les caractéristiques suivantes :

- un premier dispositif soustracteur (21) auquel est amenée une première valeur d'information d'image (Max) comme signal d'entrée, et un deuxième dispositif soustracteur (22) auquel est amenée une deuxième valeur d'information d'image (Min) comme signal d'entrée, et auxquelles une troisième valeur d'information d'image (L3) est amenée respectivement, les dispositifs soustracteurs (21, 22) fournissant comme signaux de sortie (A21, A22) respectivement le montant d'une différence entre le signal d'entrée respectif (Max, Min) et la troisième valeur d'information d'image (L3),
- un premier dispositif limiteur (51) placé en aval du premier dispositif soustracteur (21) et un deuxième dispositif limiteur (52) placé en aval du deuxième dispositif soustracteur (22), les dispositifs limiteurs (51, 52) limitant respectivement les signaux de sortie (A21, A22) des dispositifs soustracteurs (21, 22) à une valeur limite prédéfinie,
- un dispositif soustracteur supplémentaire (31) placé en aval du premier dispositif limiteur (51), qui soustrait un signal présent à la sortie du premier dispositif limiteur (A51) de la première valeur d'information d'image (Max), et un dispositif additionneur (32) placé en aval du deuxième dispositif limiteur (52), qui additionne un signal (A52) présent à la sortie du deuxième dispositif limiteur (52) à la deuxième valeur d'information d'image (Min),
- un dispositif comparateur (80) auquel sont amenés le premier et le deuxième signal de sortie de limiteur (A51, A52) et qui fournit un signal de commande (S80) en fonction d'une comparaison de ces signaux (A51, A52),
- un premier circuit de sélection (90) auquel sont amenés le signal de commande (S80) du dispositif comparateur (80) ainsi qu'un signal de sortie (A31) du dispositif soustracteur supplémentaire (31) et un signal de sortie (A32) du dispositif additionneur (32) et qui, en fonction du signal de commande (S80), met à disposition à sa sortie l'un de ces deux signaux de sortie comme signal de sortie (A90),
- un deuxième dispositif comparateur (60) auquel sont amenées la première et la deuxième valeur d'information d'image (L10, L20) et une troisième valeur d'information d'image (L3), et qui fournit un deuxième signal de commande (S60) en fonction d'une comparaison de ces signaux,
- un deuxième circuit de sélection (70) auquel sont amenés la troisième valeur d'information d'image (L3), le signal de sortie du premier circuit de sortie (90) et le deuxième signal de commande (S60), et qui, en fonction du deuxième signal de commande (S60), sort la troisième valeur d'information d'image (L3) ou le signal de sortie (A90) du premier circuit de sélection (90) comme valeur d'information d'image interpolée (Lx),
- un dispositif mélangeur (16) qui fournit la troisième valeur d'information d'image (L3) à partir d'au moins une première et une deuxième valeur d'information d'image supplémentaire (L30, L40) par mélange de ces valeurs d'information d'image.

**16.** Dispositif selon la revendication 15, où, en amont des dispositifs soustracteurs (21, 22), est placé un dispositif de tri (1 ; 11) auquel est amené au moins une paire de valeurs d'information d'image (L10, L20 ; L1, L2, Lf), le dispositif de tri (1) sélectionnant une paire de valeurs et sortant la valeur la plus grande de la paire de valeurs comme première valeur d'information d'image (Max) et la valeur la plus petite de la paire de valeurs comme deuxième valeur d'information d'image (Min).

**17.** Dispositif selon la revendication 16, où le dispositif de tri détermine pour chaque paire de valeurs un intervalle entre les valeurs d'information d'image de la paire de valeurs et sélectionne la paire de valeurs entre les valeurs desquelles est formé l'intervalle le plus petit.

FIG 1

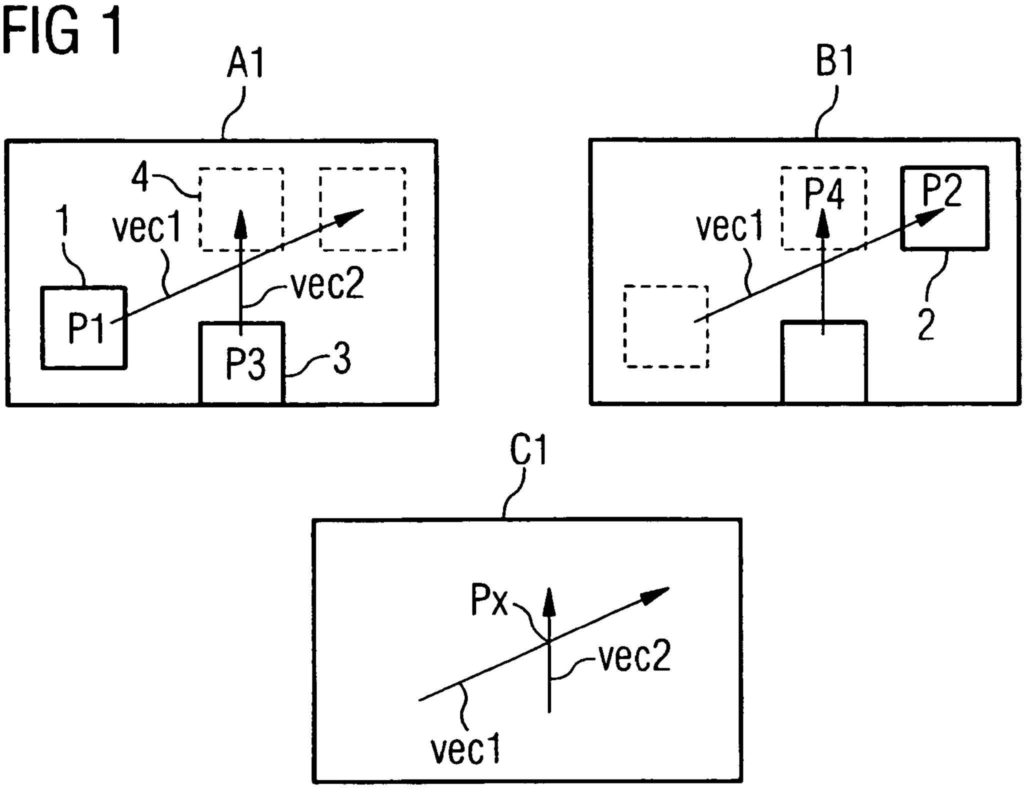


FIG 2A

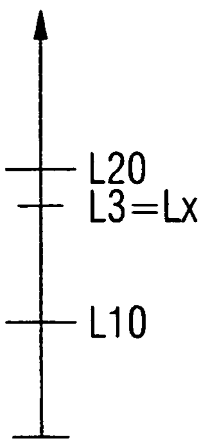


FIG 2B

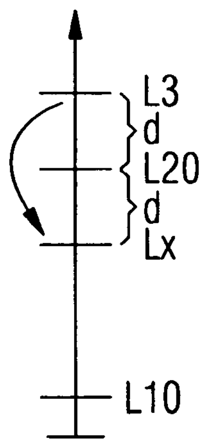


FIG 2C

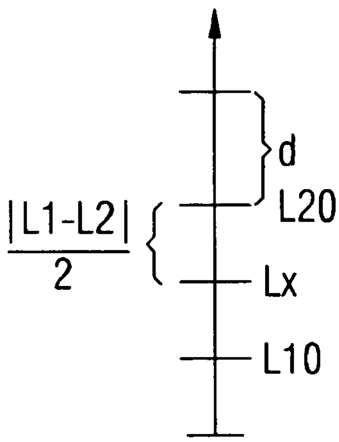

FIG 2

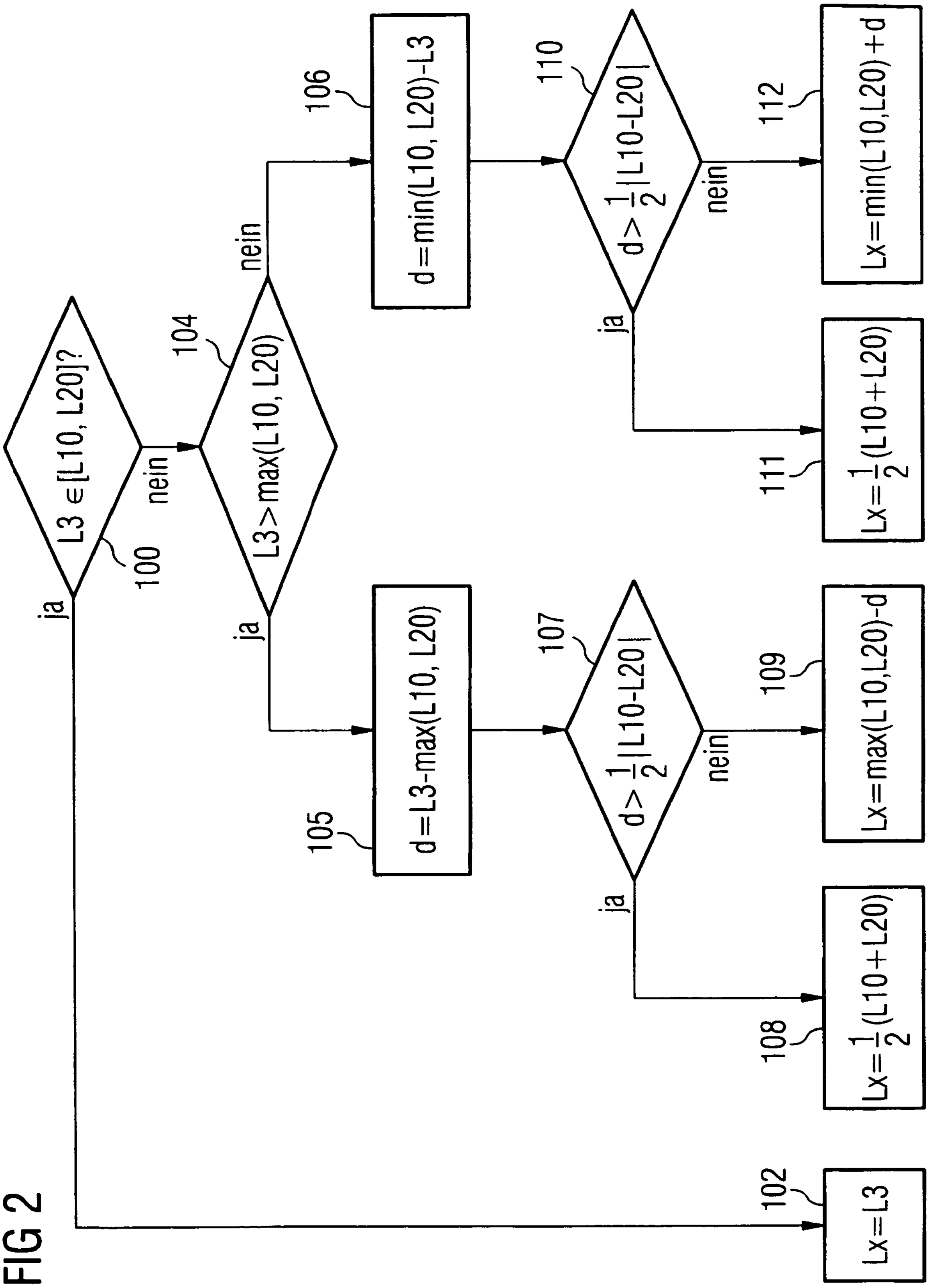

L3 ∈[L10, L20]?
100
ja
nein
Lx=L3
102
L3>max(L10, L20)
104
ja
nein
d=L3-max(L10, L20)
105
d=min(L10, L20)-L3
106
d> 1/2 |L10-L20|
107
ja
nein
Lx= 1/2 (L10+L20)
108
Lx=max(L10,L20)-d
109
d> 1/2 |L10-L20|
110
ja
nein
Lx= 1/2 (L10+L20)
111
Lx=min(L10,L20)+d
112

FIG 4

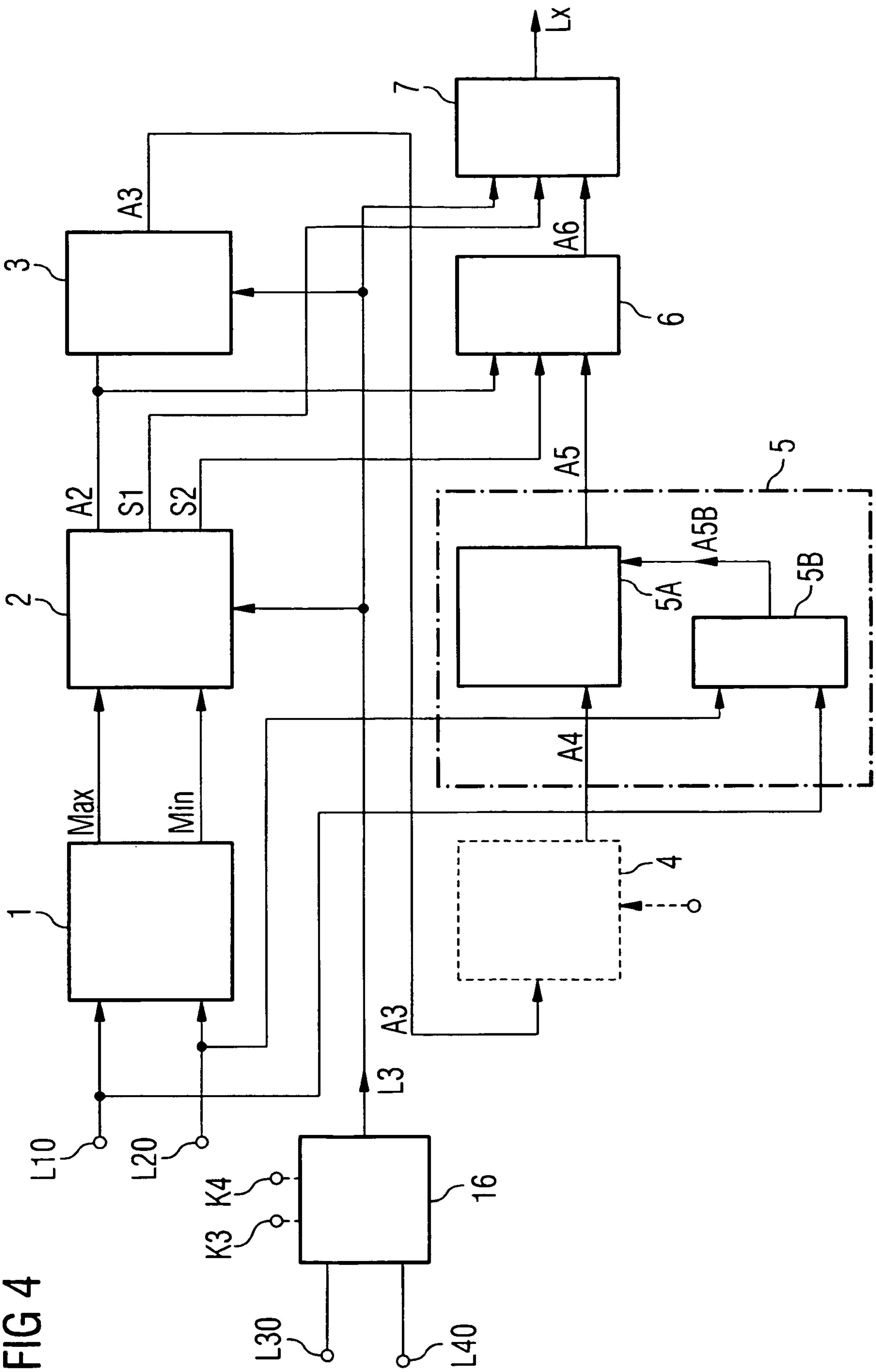
1
2
3
4
5
5A
5B
6
7
16
Max
Min
A2
S1
S2
A3
A3
A4
A5
A5B
A6
Lx
L3
L10
L20
L30
L40
K3
K4

FIG 5

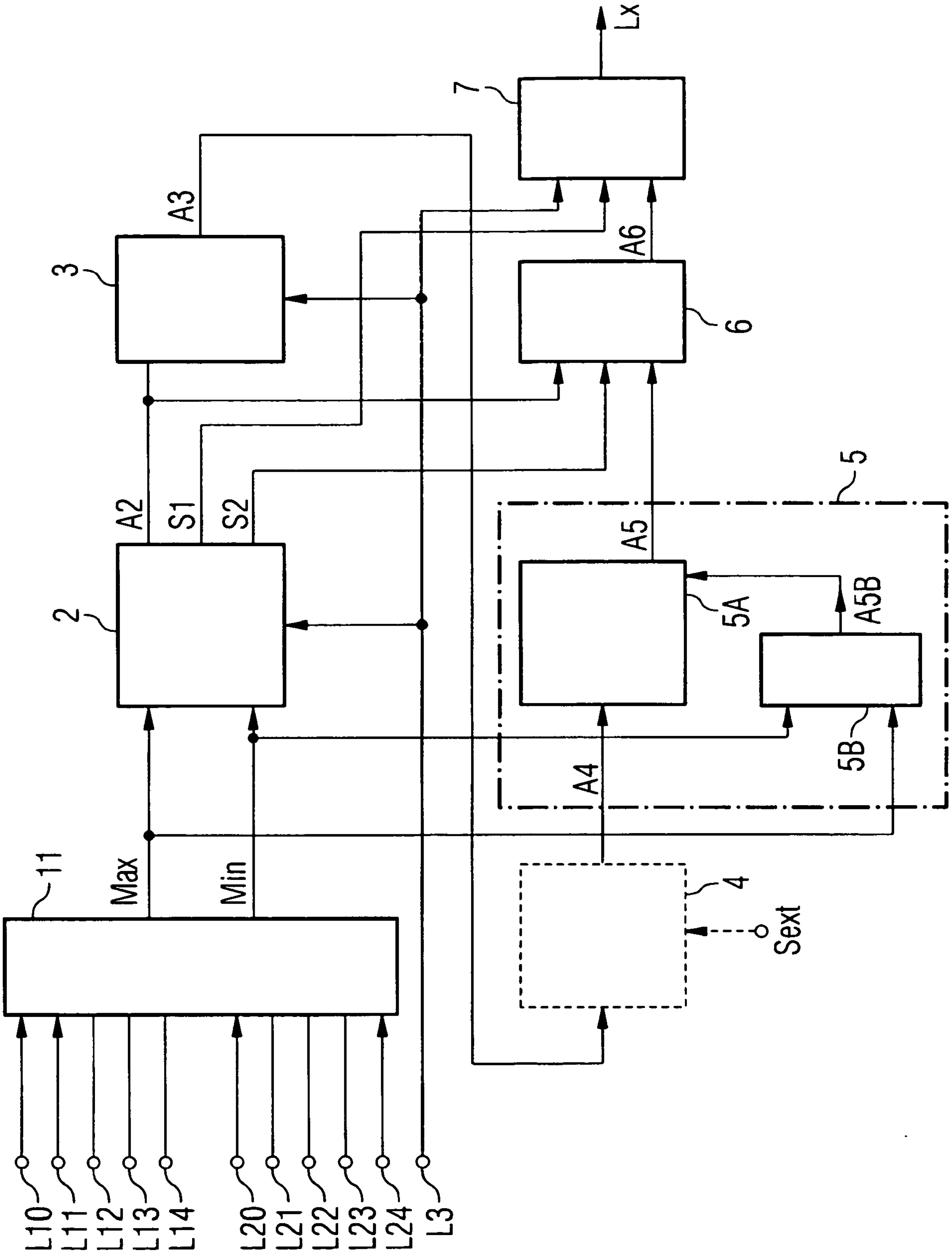
L10
L11
L12
L13
L14
L20
L21
L22
L23
L24
L3
11
Max
Min
2
A2
S1
S2
3
A3
4
Sext
A4
5
5A
5B
A5B
A5
6
A6
7
Lx

FIG 6

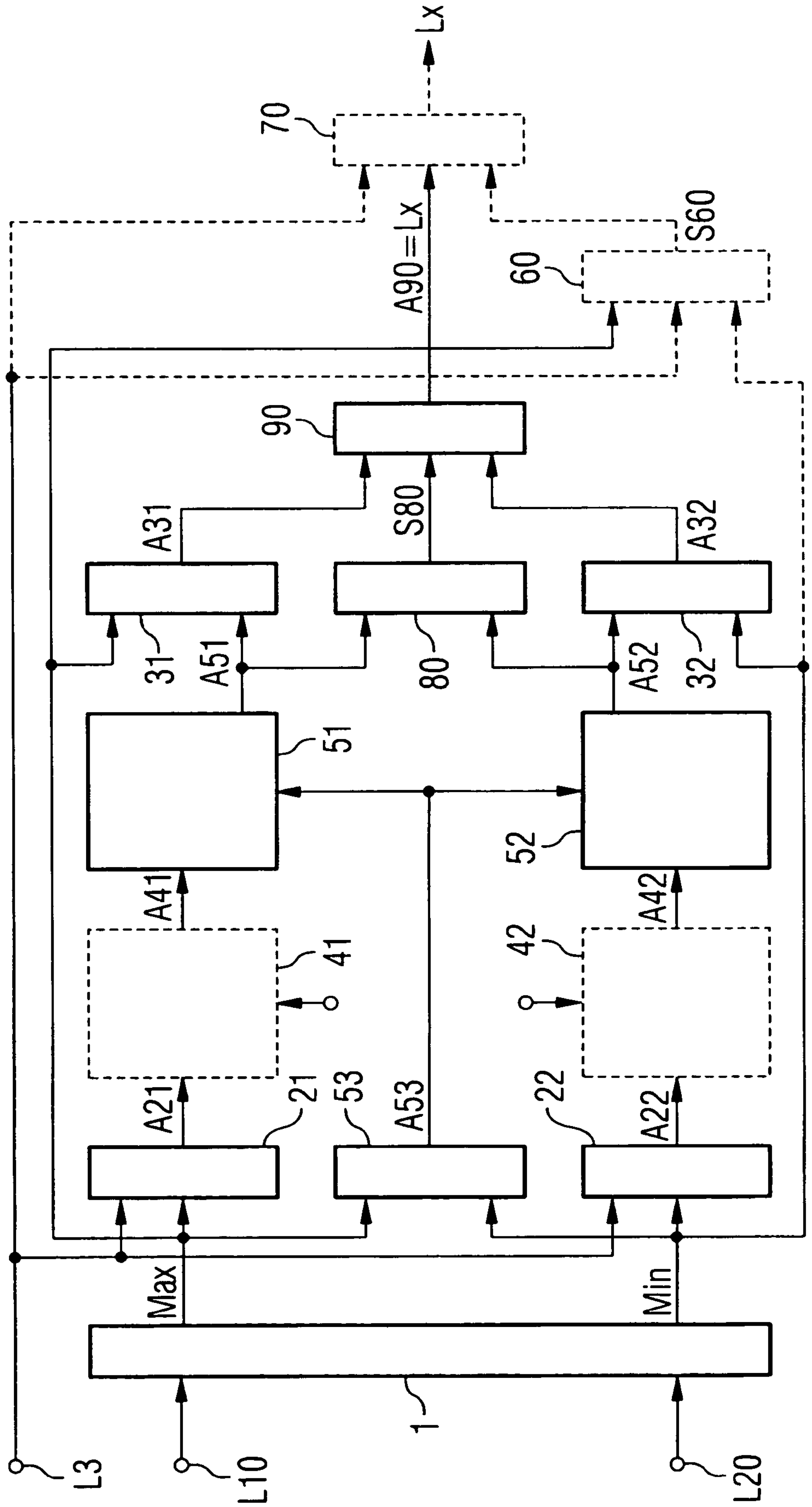
Lx
70
A90=Lx
S60
60
90
A31
S80
A32
31
A51
80
A52
32
51
52
A41
A42
41
42
A21
21
53
A53
22
A22
Max
Min
1
L3
L10
L20

FIG 7

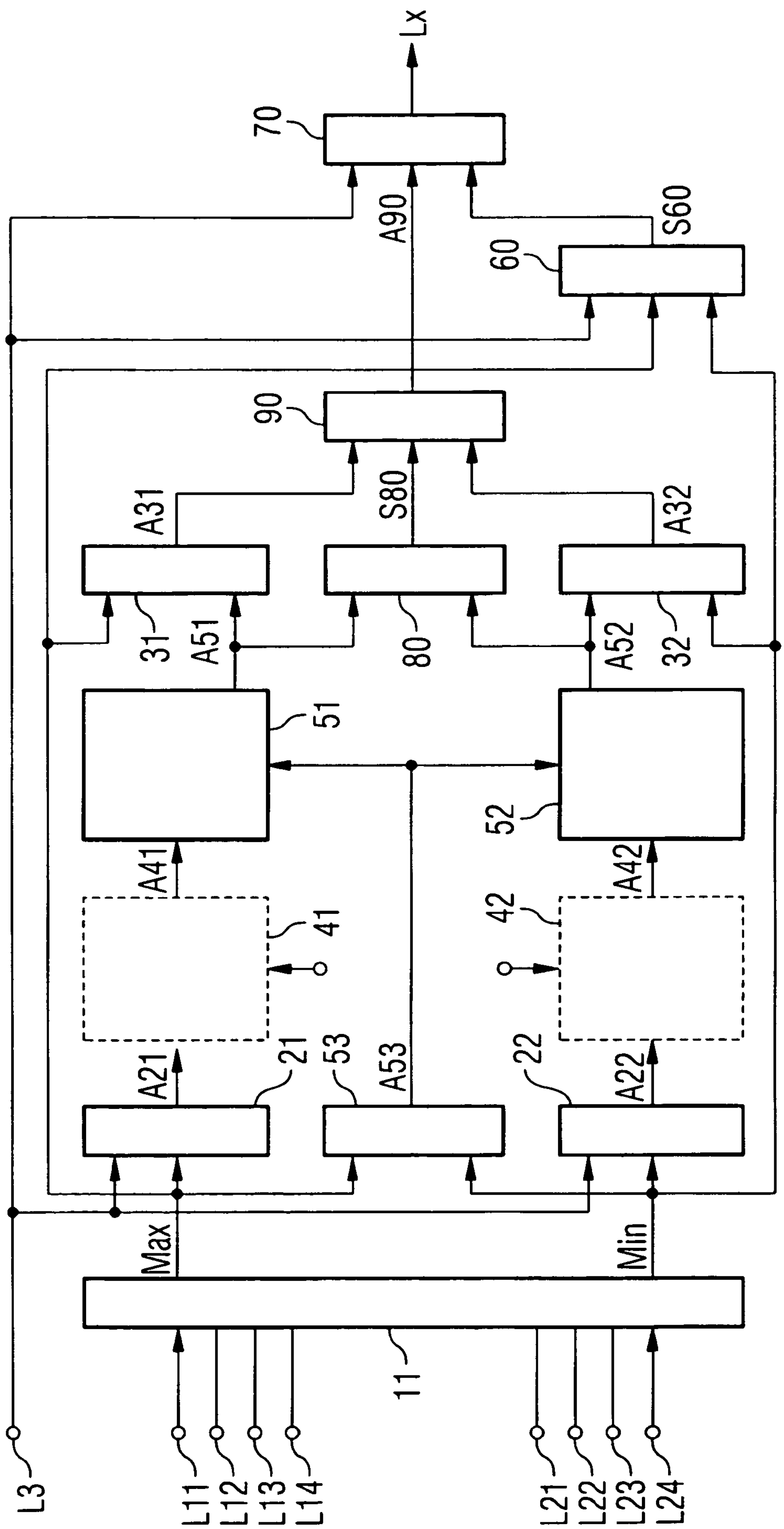

L3
L11
L12
L13
L14
L21
L22
L23
L24
11
Max
Min
21
22
53
A21
A22
A53
41
42
A41
A42
51
52
A51
A52
31
32
80
A31
A32
S80
90
A90
60
S60
70
Lx

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5534946 A